(19) Europäisches Patentamt / European Patent Office / Office européen des brevets

(11) **EP 2 778 647 B1**

(12) **EUROPÄISCHE PATENTSCHRIFT**

(45) Veröffentlichungstag und Bekanntmachung des Hinweises auf die Patenterteilung:
**09.05.2018 Patentblatt 2018/19**

(51) Int Cl.:
***G01M 11/00*** *(2006.01)*

(21) Anmeldenummer: **13158597.8**

(22) Anmeldetag: **11.03.2013**

(54) **Verfahren zum Charakterisieren einer Lichtleitfaser**

Method for characterising an optical fibre

Procédé de caractérisation d'une fibre optique

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**17.09.2014 Patentblatt 2014/38**

(73) Patentinhaber: **Deutsche Telekom AG**
**53113 Bonn (DE)**

(72) Erfinder: **Bunge, Christian-Alexander**
**12157 Berlin (DE)**

(74) Vertreter: **Patentship**
**Patentanwaltsgesellschaft mbH**
**Elsenheimerstraße 65**
**80687 München (DE)**

(56) Entgegenhaltungen:
**US-A- 5 416 862**

• WEBSTER M ET AL: "A Statistical Analysis of Conditioned Launch for Gigabit Ethernet Links Using Multimode Fiber", JOURNAL OF LIGHTWAVE TECHNOLOGY, IEEE SERVICE CENTER, NEW YORK, NY, US, Bd. 17, Nr. 9, 1. September 1999 (1999-09-01), XP011029513, ISSN: 0733-8724

• A. ROSE ET AL: "Mode Field Pertubations and Numerical Aperture Broadening Due to Angular Misalignment in Multimode Fiber Coupling", SPIE, PO BOX 10 BELLINGHAM WA 98227-0010 USA, 6. März 2009 (2009-03-06), XP040491850,

• "Spiral Launch Method for Enhanced MMF Bandwidth ; blauvelt_1_0304", IEEE DRAFT; BLAUVELT_1_0304, IEEE-SA, PISCATAWAY, NJ USA, Bd. 802.3, 16. März 2004 (2004-03-16), Seiten 1-48, XP017623362, [gefunden am 2004-03-16]

• RADDATZ L ET AL: "An Experimental and Theoretical Study of the Offset Launch Technique for the Enhancement of the Bandwidth of Multimode Fiber Links", JOURNAL OF LIGHTWAVE TECHNOLOGY, IEEE SERVICE CENTER, NEW YORK, NY, US, Bd. 16, Nr. 3, 1. März 1998 (1998-03-01), XP011029069, ISSN: 0733-8724

• BOECHAT A A P ET AL: "Monitoring of power coupling efficiency into fibre-optic beam delivery systems: cladding power measurement techniques", MEASUREMENT SCIENCE AND TECHNOLOGY, IOP, BRISTOL, GB, Bd. 2, Nr. 11, 1. November 1991 (1991-11-01), Seiten 1107-1112, XP020065136, ISSN: 0957-0233, DOI: 10.1088/0957-0233/2/11/019

EP 2 778 647 B1

**Beschreibung**

TECHNISCHES GEBIET

Die vorliegende Erfindung betrifft das Gebiet der elektromagnetischen Wellenleiter.

TECHNISCHER HINTERGRUND

Elektromagnetische Wellenleiter, beispielsweise optische Multimodefasern, werden üblicherweise in hochbitratigen Kurzstreckenverbindungen, wie z. B. in Rechenzentren, Vermittlungsstellen oder für Büroverkabelungen, eingesetzt.

Elektromagnetische Wellenleiter können entweder über die Bestimmung ihrer Übertragungseigenschaften oder durch die Bestimmung ihres Brechzahlprofils charakterisiert werden. Für die Charakterisierung der Übertragungseigenschaften von elektromagnetischen Wellenleitern sind heutzutage zwei Verfahren gebräuchlich. Zum einen wird die Bandbreite des elektromagnetischen Wellenleiters bei einer standardisierten Einkoppelbedingung gemessen. Zum anderen wird versucht, die Laufzeitunterschiede der Wellenleiterausbreitungsmoden direkt über eine Differential-Mode-Delay-Messung (DMD-Messung) zu bestimmen.

Die Übertragungseigenschaften eines elektromagnetischen Wellenleiters sind von seiner Anregung und dadurch von der Leistungsverteilung über seine Wellenleiterausbreitungsmoden abhängig. Je nachdem welche Wellenleiterausbreitungsmoden vorrangig angeregt wurden, können die gemessenen Übertragungseigenschaften deutlich variieren. Aus diesem Grunde werden für die Messung von Übertragungseigenschaften standardisierte Anregungsbedingungen vorgeschrieben.

Für die Bandbreitenmessungen, die nach der Druckschrift "Measurement of Bandwidth on Multimode Fiber", ANSI/TIA/EIA-455- 204-2000 FOTP-204, Dec. 2000 und der Druckschrift "Pulse distortion measurement of multimode glass optical fiber", EIA-TIA 455-51 FOTP-51A standardisiert sind, werden meist zwei verschiedene Anregungsbedingungen verwendet. Der sogenannte Restricted Mode-Launch (RML), emuliert die Anregung mit einem vertikal emittierenden Laser (VCSEL) und erzeugt eine Leistungsverteilung über die Wellenleiterausbreitungsmoden, die der Anregungsbedingung im realen System möglichst ähnlich ist. Dazu kommt noch eine Worst-Case-Anregungsbedingung, bei der möglichst alle Wellenleiterausbreitungsmoden gleichmäßig angeregt werden, um eine Information über das Gesamtverhalten des elektromagnetischen Wellenleiters zu erhalten. Diese Anregung wird als Overfilled Launch (OFL) bezeichnet und emuliert eine Ausleuchtung mit einer Lumineszenzdiode, die sowohl Fläche als auch Winkelbereich des elektromagnetischen Wellenleiters komplett ausleuchtet.

Die DMD-Messung soll prinzipiell einzelne Wellenleiterausbreitungsmodengruppen selektiv anregen, so dass eine Laufzeitmessung dieser einzelnen Wellenleiterausbreitungsmoden bzw. Wellenleiterausbreitungsmodengruppen möglich wird. Die Genauigkeit des Verfahrens hängt von der Selektivität der Anregung und der jeweils angeregten Wellenleiterausbreitungsmoden ab.

Die Einkopplung erfolgt bei der konventionellen DMD-Messung mittels eines einmodigen weiteren elektromagnetischen Wellenleiters, der parallel zur Wellenleiterachse, aber mit kontrolliertem seitlichen Versatz den zu untersuchenden elektromagnetischen Wellenleiter selektiv anregt. Die Selektivität ist jedoch nicht sehr hoch wie in der Druckschrift S. Golowich, W. Reed, and A. Ritger, "A New Modal Power Distribution Measurement for High-Speed Short-Reach Optical Systems," IEEE/OSA Journal of Lightwave Technology 22(2), pp. 457-468, 2004 beschrieben ist. Außerdem werden dadurch überwiegend meridionale $LP_{0,m}$-Moden angeregt, deren Feldverteilung über einen breiten Radiusbereich im Zentrum des elektromagnetischen Wellenleiters bis hin zum seitlichen Versatz $\Delta x$ reicht, unter dem der elektromagnetische Wellenleiter angeregt wurde. Somit werden die Laufzeiten dieser Wellenleiterausbreitungsmoden nicht ausschließlich durch den Bereich des Brechzahlprofils in der Nähe von A$x$ beeinflusst, sondern auch von Profilbereichen näher zur Wellenleiterachse hin. Dieser Effekt ist besonders ausgeprägt bei elektromagnetischen Wellenleitern, die einen Brechzahleinbruch im Zentrum des elektromagnetischen Wellenleiters, einen sogenannten Dip, aufweisen.

Die größte Bandbreitenbegrenzung in mehrmodigen elektromagnetischen Wellenleitern stellt im Allgemeinen die Modendispersion dar, die durch unterschiedliche Laufzeiten der einzelnen Wellenleiterausbreitungsmoden entsteht. Da die Übertragungseigenschaften elektromagnetischer Wellenleiter davon abhängen, welche Wellenleiterausbreitungsmoden genau angeregt werden bzw. wie viel Leistung die Wellenleiterausbreitungsmoden tragen, lässt sich die Übertragungsqualität des elektromagnetischen Wellenleiters im Allgemeinen nicht sehr gut durch eine Bandbreitemessung charakterisieren.

Daher wird in letzter Zeit dazu übergegangen, die Laufzeitunterschiede der Wellenleiterausbreitungsmoden bzw. Wellenleiterausbreitungsmodengruppen über DMD-Messungen direkt zu bestimmen. Aus den DMD-Messungen kann grundsätzlich ein Rückschluss auf die Qualität bzw. Form des Brechzahlprofils gezogen werden, um auf Grund dieser Information das Profil zu optimieren. Die DMD-Messungen regen allerdings Prinzip bedingt nur die niedrigsten Wellenleiterausbreitungsmoden der Wellenleiterausbreitungsmodenhauptgruppen an, da die Anregung über eine Einstrahlung lediglich parallel zur Wellenleiterachse mit seitlichem Versatz erfolgt.

Wellenleiterausbreitungsmoden, die eine höhere Umfangsordnung besitzen, wie z. B. die Helix-Wellenleiterausbreitungsmoden, werden damit nicht angeregt und können somit auch nicht gemessen werden. Die Wellenleiterausbreitungsmoden mit niedriger Umfangsordnung haben allerdings den Nachteil, dass sie zum Teil stark durch den inneren Bereich des Brechzahlprofils im Zentrum des elektromagnetischen Wellenleiters beeinflusst werden und somit die Bewertung des Brechzahlprofils kompliziert wird.

Eine direkte Auswertung der gemessenen Laufzeiten zur Bestimmung des Brechzahlprofils ist unter bestimmten Randbedingungen möglich. In der Druckschrift K. Petermann, "Simple relationship between differential mode delay in optical fibres and the deviation from optimum profile", IEE Electron. Lett. 14, pp. 793-793, Nov. 1978 wird eine Methode beschrieben, um aus DMD-Messwerten eine Profiloptimierung vorzunehmen. Allerdings gilt die dort angegebene Lösung nur unter der Randbedingung eines kontinuierlich fallenden Brechzahlprofils.

Die Modendispersion ist im Allgemeinen durch das Brechzahlprofil bestimmt. Das Brechzahlprofil kann die Wellenleiterausbreitungsmoden in der Art beeinflussen, dass alle Wellenleiterausbreitungsmoden nahezu die gleiche Gruppenlaufzeit aufweisen. Je besser die Modendispersion bzw. die Laufzeitunterschiede vermindert werden sollen, desto besser sollte das Brechzahlprofil des elektromagnetischen Wellenleiters optimiert werden. Hierfür sind genaue Messungen des Brechzahlprofils vorteilhaft, die nicht nur das Brechzahlprofil selbst, sondern auch die Auswirkungen des Brechzahlprofils auf die Wellenleiterausbreitungsmodenlaufzeiten erfassen. Da die Wellenleiterausbreitungsmodenlaufzeiten viel empfindlicher auf Abweichungen vom optimalen Brechzahlprofil reagieren, als mit konventionellen Messmethoden erfasst werden kann, sind selektive Messungen der Wellenleiterausbreitungsmodenlaufzeiten wünschenswert zur Optimierung eines elektromagnetischen Wellenleiters.

Die Druckschrift Webster, M. et al.: "A Statistical Analysis of Conditioned Launch for Gigabit Ethernet Links Using Multimode Fiber", Journal of Lightwave Technology, IEEE Service Center, New York, NY, USA, Bd. 17, Nr. 9, 1. September 1999 offenbart eine statistische Analyse eines Einkoppelns eines Lichtsignals in eine Multimode-Glasfaser für eine Gigabit-Ethernet-Verbindung.

Die Druckschrift Rose, A. et al: "Mode Field Perturbations and Numerical Aperture Broadening Due to Angular Misalignment in Multimode Fiber Coupling", Optical Fibers and Sensors for Medical Diagnostics and Treatment Applications IX, Proc. of SPIE, Vol. 7173, 2009 offenbart eine Untersuchung von Modenfeldstörungen und Aufweitungen einer numerischen Apertur in einer Multimode-Glasfaser aufgrund fehlangepasster Winkel beim Einkoppeln eines Laserstrahls.

Die Druckschrift Vernooy, D., Blauvelt H.: "Spiral Launch Method for Enhanced MMF Bandwidth", IEEE Draft, IEEE-SA, Piscataway, NJ, USA, Bd. 802.3, 16. März 2004, Seiten 1-48 offenbart eine Untersuchung von Einkoppelverfahren zur Verbesserung einer Bandbreite einer Multimode-Glasfaser.

ZUSAMMENFASSUNG

Es ist daher die Aufgabe der vorliegenden Erfindung, ein verbessertes Konzept für die Erfassung einer Charakteristik eines elektromagnetischen Wellenleiters zu schaffen.

Diese Aufgabe wird durch die Merkmale der unabhängigen Ansprüche gelöst. Vorteilhafte Ausführungsformen der Erfindung sind Gegenstand der Beschreibung, der Zeichnungen sowie der abhängigen Ansprüche.

Die vorliegende Erfindung basiert auf der Erkenntnis, dass die obige Aufgabe auf der Basis einer selektiven Anregung einzelner Wellenleiterausbreitungsmoden bzw. Wellenleiterausbreitungsmodengruppen gelöst werden kann.

Die selektive Anregung kann durch einen vorbestimmten Einkoppelwinkel, welcher sich von 0° unterscheidet, erreicht werden, wodurch im Vergleich zu einer lateralen Anregung höhere Wellenleiterausbreitungsmoden einer Wellenleiterausbreitungsmodengruppe angeregt werden.

Dadurch wird erreicht, dass sich das elektromagnetische Feld auf einen bestimmten Bereich, insbesondere einen ringförmigen Bereich um die Ausbreitungsrichtung des elektromagnetischen Wellenleiters, konzentriert. Somit wird eine deutlich verbesserte Charakterisierung des elektromagnetischen Wellenleiters bewirkt.

Gemäß einem ersten Aspekt betrifft die Erfindung ein Verfahren zum Charakterisieren eines elektromagnetischen Wellenleiters, mit: Einkoppeln eines elektromagnetischen Welleneingangssignals in den elektromagnetischen Wellenleiter unter einem vorbestimmten Einkoppelwinkel, welcher sich von 0° unterscheidet, um zumindest eine vorbestimmte Wellenleiterausbreitungsmode in den elektromagnetischen Wellenleiter einzukoppeln; und Erfassen einer Charakteristik des elektromagnetischen Wellenleiters auf der Basis eines elektromagnetischen Wellenausgangssignals.

Der vorbestimmte Einkoppelwinkel kann sich auf den Winkel zwischen der Ausbreitungsrichtung des elektromagnetischen Welleneingangssignals und der Ausbreitungsrichtung des elektromagnetischen Wellenleiters beziehen. Die Ausbreitungsrichtung des elektromagnetischen Welleneingangssignals und die Ausbreitungsrichtung des elektromagnetischen Wellenleiters können ferner windschief zueinander liegen. Der vorbestimmte Einkoppelwinkel kann beispielsweise einen Wert in einem Intervall größer als 0° und kleiner als 90°, beispielsweise einen Wert von 1°, 2°, 5°, 10°, 15°, 20°, 25°, 30°, 35°, 40°, 45°, 50°, 55°, 60°, 65°, 70°, 75°, 80° oder 85°, annehmen. Durch den vorbestimmten Einkoppelwinkel wird somit eine Verkippung realisiert. Zusätzlich kann ein vorbestimmter lateraler Versatz beim Einkoppeln verwendet werden.

Gemäß einer Ausführungsform umfasst der elektromagnetische Wellenleiter einen rotationssymmetrischen Querschnitt.

Durch den rotationssymmetrischen Querschnitt des elektromagnetischen Wellenleiters wird erreicht, dass die zumindest eine vorbestimmte Wellenleiterausbreitungsmode durch eine Umfangsordnung in Zylinderkoordinaten charakterisiert werden kann. Durch den rotationssymmetrischen Querschnitt werden zudem Symmetriebedingungen geschaffen, welche durch die ausbreitungsfähigen Wellenleiterausbreitungsmoden erfüllt sein müssen.

Gemäß einer Ausführungsform ist der elektromagnetische Wellenleiter ein optischer Wellenleiter, insbesondere eine Glasfaser.

Im optischen Wellenleiter ist zumindest eine Wellenleiterausbreitungsmode bei optischen Frequenzen bzw. optischen Wellenlängen ausbreitungsfähig. Die optischen Frequenzen bzw. optischen Wellenlängen umfassen beispielsweise den Frequenzbereich bzw. Wellenlängenbereich des sichtbaren Lichts, des unsichtbaren Infrarotlichts sowie des Ultraviolettlichts.

Die Glasfaser kann aus Quarzglas mit Dotierung bestehen. Beispielsweise umfasst die Glasfaser auch eine Multimode-Glasfaser mit Gradientenindex-Brechzahlprofil.

Gemäß einer Ausführungsform umfasst das Einkoppeln des elektromagnetischen Welleneingangssignals in den elektromagnetischen Wellenleiter unter dem vorbestimmten Einkoppelwinkel ferner das Einkoppeln des elektromagnetischen Welleneingangssignals in den elektromagnetischen Wellenleiter mit einem vorbestimmten lateralen Versatz.

Das elektromagnetische Welleneingangssignal wird also neben einem vorbestimmten Einkoppelwinkel zusätzlich unter einem vorbestimmten lateralen Versatz in den elektromagnetischen Wellenleiter eingekoppelt.

Der vorbestimmte laterale Versatz kann sich auf den Eintrittspunkt des Welleneingangssignals durch die Querschnittsfläche des elektromagnetischen Wellenleiters relativ zu einem vorbestimmten Bezugspunkt auf der Querschnittsfläche des elektromagnetischen Wellenleiters beziehen. Der vorbestimmte Bezugspunkt umfasst beispielsweise den Schnittpunkt zwischen der Ausbreitungsrichtung des elektromagnetischen Wellenleiters und der Querschnittsfläche des elektromagnetischen Wellenleiters. Der vorbestimmte Bezugspunkt umfasst insbesondere den Mittelpunkt einer kreisscheibenförmigen Querschnittsfläche eines elektromagnetischen Wellenleiters.

Gemäß einer Ausführungsform trägt die zumindest eine vorbestimmte Wellenleiterausbreitungsmode zu einer vorbestimmten Feldintensitätsverteilung im elektromagnetischen Wellenleiter bei.

Die vorbestimmte Feldintensitätsverteilung kann beispielsweise durch eine gleichzeitige Anregung einer einzigen oder einer Mehrzahl von vorbestimmten Wellenleiterausbreitungsmoden erzeugt werden. Durch die Wahl einer vorbestimmten Feldintensitätsverteilung wird erreicht, dass nur vorbestimmte Bereiche des elektromagnetischen Wellenleiters die erfasste Charakteristik des elektromagnetischen Wellenleiters beeinflussen.

Gemäß einer Ausführungsform ist der vorbestimmte Einkoppelwinkel von dem vorbestimmten lateralen Versatz abhängig oder wird in Abhängigkeit von dem vorbestimmten lateralen Versatz bestimmt, oder ist der vorbestimmte laterale Versatz von dem vorbestimmten Einkoppelwinkel abhängig oder wird in Abhängigkeit von dem vorbestimmten Einkoppelwinkel bestimmt.

Dadurch wird erreicht, dass mittels einer vorbestimmten Relation, die theoretisch und/oder empirisch sein kann, zwischen dem vorbestimmten Einkoppelwinkel und dem vorbestimmten lateralen Versatz eine vorbestimmte Feldintensitätsverteilung im elektromagnetischen Wellenleiter erzeugt werden kann.

Gemäß einer Ausführungsform wird der vorbestimmte Einkoppelwinkel ferner in Abhängigkeit geometrischer Abmessungen des elektromagnetischen Wellenleiters, insbesondere eines Kernradius, sowie in Abhängigkeit von Materialparametern des elektromagnetischen Wellenleiters, insbesondere einer Brechzahl oder einer numerischen Apertur, bestimmt.

Die geometrischen Abmessungen des elektromagnetischen Wellenleiters können beispielsweise eine Länge, eine Höhe, eine Breite, einen Radius, einen Durchmesser oder daraus abgeleitete Größen wie Flächen oder Volumina umfassen. Insbesondere können die geometrischen Abmessungen des elektromagnetischen Wellenleiters einen Kernradius eines rotationssymmetrischen Wellenleiters umfassen.

Die Materialparameter des elektromagnetischen Wellenleiters können beispielsweise eine elektrische Permittivität, eine magnetische Permeabilität, eine Leitfähigkeit, eine Wellenausbreitungsgeschwindigkeit oder daraus abgeleitete Größen umfassen.

Die Materialparameter können eine Brechzahl bzw. einen Brechungsindex umfassen. Die Brechzahl kann auch eine effektive Brechzahl, eine Referenzbrechzahl oder ein Brechzahlprofil umfassen. Eine effektive Brechzahl ist dabei auf die gesamte Querschnittsfläche des elektromagnetischen Wellenleiters bezogen. Eine Referenzbrechzahl bezieht sich auf eine lokale Brechzahl an einem Referenzpunkt auf der Querschnittsfläche des elektromagnetischen Wellenleiters. Ein Brechzahlprofil beschreibt eine Abhängigkeit einer lokalen Brechzahl auf der Querschnittsfläche des elektromagnetischen Wellenleiters von einer geometrischen Koordinate, beispielsweise einem Radius, auf der Querschnittsfläche des elektromagnetischen Wellenleiters.

Die Materialparameter können ferner eine numerische Apertur umfassen. Die numerische Apertur kann zwischen einem Kern des elektromagnetischen Wellenleiters und einem Mantel des elektromagnetischen Wellenleiters bestimmt werden. Im Kern des elektromagnetischen Wellenleiters wird ein überwiegender Anteil der vorbestimmten Feldintensitätsverteilung innerhalb der zugehörigen Kernquerschnittsfläche angeregt. Im Mantel des elektromagnetischen Wellenleiters wird ein vernachlässigbarer Anteil der vorbestimmten Feldintensitätsverteilung innerhalb der zugehörigen Mantelquerschnittsfläche angeregt. Die numerische Apertur kann durch einen Brechzahlsprung zwischen einem Kern des elektromagnetischen Wellenleiters und einem Mantel des elektromagnetischen Wellenleiters bestimmt werden. Die numerische Apertur kann ferner als lokale numerische Apertur in Abhängigkeit einer geometrischen Koordinate bestimmt werden. Die numerische Apertur kann darüber hinaus in Abhängigkeit eines Akzeptanzwinkels des elektromagnetischen Wellenleiters bestimmt werden. Der Akzeptanzwinkel des elektromagnetischen Wellenleiters beschreibt den Winkel zwischen der Ausbreitungsrichtung des elektromagnetischen Welleneingangssignals und der Ausbreitungsrichtung des elektromagnetischen Wellenleiters bis zu dem ein Einkoppeln des elektromagnetischen Welleneingangssignals möglich ist.

Durch die Berücksichtigung der geometrischen Abmessungen des elektromagnetischen Wellenleiters sowie der Materialparameter des elektromagnetischen Wellenleiters kann der vorbestimmte Einkoppelwinkel gemäß einer Ausführungsform mittels einer vorbestimmten Relation, die theoretisch und/oder empirisch sein kann, genauer bestimmt werden. Zudem lassen sich allgemeingültigere vorbestimmte Relationen, die theoretisch und/oder empirisch sein können, ableiten.

Gemäß einer Ausführungsform trägt die zumindest eine vorbestimmte Wellenleiterausbreitungsmode zu einer ringförmigen Feldintensitätsverteilung im elektromagnetischen Wellenleiter bei.

Bei einer ringförmigen Feldintensitätsverteilung wird ein überwiegender Anteil der vorbestimmten Feldintensitätsverteilung innerhalb einer ringförmigen Querschnittsfläche um die Ausbreitungsrichtung des elektromagnetischen Wellenleiters angeregt. Die ringförmige Feldintensitätsverteilung kann beispielsweise durch eine gleichzeitige Anregung einer einzigen oder einer Mehrzahl von vorbestimmten Wellenleiterausbreitungsmoden resultieren. Mögliche Wellenleiterausbreitungsmoden umfassen insbesondere schraubenförmige Wellenleiterausbreitungsmoden, die eine Schiefe bzw. Skewness aufweisen. Durch die Wahl einer ringförmigen Feldintensitätsverteilung wird erreicht, dass nur Bereiche gleicher lokaler Materialparameter eines rotationssymmetrischen elektromagnetischen Wellenleiters die erfasste Charakteristik des elektromagnetischen Wellenleiters beeinflussen.

Gemäß einer Ausführungsform wird das elektromagnetische Welleneingangssignal mittels eines weiteren elektromagnetischen Wellenleiters in den elektromagnetischen Wellenleiter eingekoppelt.

Der weitere elektromagnetische Wellenleiter stellt das Welleneingangssignal zum Einkoppeln in den elektromagnetischen Wellenleiter bereit. Die Ausbreitungsrichtung des weiteren elektromagnetischen Wellenleiters kann mit der Ausbreitungsrichtung des elektromagnetischen Welleneingangssignals identisch sein. Insbesondere umfasst der weitere elektromagnetische Wellenleiter eine Singlemode-Glasfaser.

Durch das Einkoppeln des elektromagnetischen Welleneingangssignals in den elektromagnetischen Wellenleiter mittels eines weiteren elektromagnetischen Wellenleiters wird erreicht, dass ein definiertes und wiederholbares Einkoppeln des elektromagnetischen Welleneingangssignals in den elektromagnetischen Wellenleiter ermöglicht wird.

Gemäß einer Ausführungsform ist der vorbestimmte Einkoppelwinkel oder ein vorbestimmter lateraler Versatz, beispielsweise der vorgenannte vorbestimmte laterale Versatz, beim Einkoppeln des elektromagnetischen Welleneingangssignals durch einen Winkel oder einen Versatz zwischen dem elektromagnetischen Wellenleiter und dem weiteren elektromagnetischen Wellenleiter bestimmt.

Der Winkel zwischen dem elektromagnetischen Wellenleiter und dem weiteren elektromagnetischen Wellenleiter legt dabei den vorbestimmten Einkoppelwinkel fest, unter dem das Einkoppeln des elektromagnetischen Welleneingangssignals in den elektromagnetischen Wellenleiter erfolgt. Der Winkel zwischen dem elektromagnetischen Wellenleiter und dem weiteren elektromagnetischen Wellenleiter ist beispielsweise durch den Winkel zwischen der Ausrichtung des elektromagnetischen Wellenleiters und der Ausrichtung des weiteren elektromagnetischen Wellenleiters gegeben.

Der Versatz zwischen dem elektromagnetischen Wellenleiter und dem weiteren elektromagnetischen Wellenleiter legt dabei den vorbestimmten lateralen Versatz fest, unter dem ferner das Einkoppeln des elektromagnetischen Welleneingangssignals in den elektromagnetischen Wellenleiter erfolgt. Der Versatz zwischen dem elektromagnetischen Wellenleiter und dem weiteren elektromagnetischen Wellenleiter ist beispielsweise durch eine Verschiebung des weiteren elektromagnetischen Wellenleiters gegenüber dem elektromagnetischen Wellenleiter senkrecht zur Ausbreitungsrichtung des elektromagnetischen Wellenleiters gegeben. Gemäß einer Ausführungsform kann der Winkel zwischen dem elektromagnetischen Wellenleiter und dem weiteren elektromagnetischen Wellenleiter zu einem weiteren vorbestimmten lateralen Versatz beitragen.

Der Winkel zwischen dem elektromagnetischen Wellenleiter und dem weiteren elektromagnetischen Wellenleiter und/oder der Versatz zwischen dem elektromagnetischen Wellenleiter und dem weiteren elektromagnetischen Wellenleiter können durch ein mechanisches oder elektromechanisches Stellglied eingestellt werden.

Durch das mechanische Stellglied kann die Vorgabe eines Winkels zwischen dem elektromagnetischen Wellenleiter und dem weiteren elektromagnetischen Wellenleiter oder eines Versatzes zwischen dem elektromagnetischen Wellenleiter und dem weiteren elektromagnetischen Wellenleiter rein mechanisch, beispielsweise durch die Einstellung eines Feingewindes, erfolgen. Durch das elektromechanische Stellglied kann die Vorgabe eines Winkels zwischen dem elektromagnetischen Wellenleiter und dem weiteren elektromagnetischen Wellenleiter oder eines Versatzes zwischen dem elektromagnetischen Wellenleiter und dem weiteren elektromagnetischen Wellenleiter rein elektrisch, beispielsweise durch die Einstellung einer elektrischen Spannung, erfolgen.

Durch den Einsatz des mechanischen oder elektromechanischen Stellglieds wird erreicht, dass eine präzise Einstellung des Winkels zwischen dem elektromagnetischen Wellenleiter und dem weiteren elektromagnetischen Wellenleiter und/oder des Versatzes zwischen dem elektromagnetischen Wellenleiter und dem weiteren elektromagnetischen Wellenleiter möglich wird. Zudem wird eine elektronische Steuerung oder eine elektronische Regelung des Winkels zwischen dem elektromagnetischen Wellenleiter und dem weiteren elektromagnetischen Wellenleiter und/oder des Versatzes zwischen dem elektromagnetischen Wellenleiter und dem weiteren elektromagnetischen Wellenleiter ermöglicht.

Gemäß einer Ausführungsform wird die Einstellung des vorbestimmten Einkoppelwinkels oder die Einstellung des vorbestimmten lateralen Versatzes durch eine Steuereinrichtung gesteuert oder durch eine Regeleinrichtung geregelt.

Die Steuereinrichtung kann ausgebildet sein, ein mechanisches oder elektromechanisches Stellglied derart zu steuern, dass ein vorbestimmter Einkoppelwinkel oder ein vorbestimmter lateraler Versatz realisiert werden. Die Steuereinrichtung kann elektronisch oder mechanisch ausgeführt sein.

Die Regeleinrichtung kann ausgebildet sein, ein mechanisches oder elektromechanisches Stellglied derart zu regeln, dass ein vorbestimmter Einkoppelwinkel oder ein vorbestimmter lateraler Versatz realisiert werden. Bei der Regeleinrichtung kann ein Regelkreis zur Einstellung eines vorbestimmten Einkoppelwinkels oder die Einstellung eines vorbestimmten lateralen Versatzes eingesetzt werden. Die Regeleinrichtung kann elektronisch oder mechanisch ausgeführt sein.

Durch die Einstellung des vorbestimmten Einkoppelwinkels oder die Einstellung des vorbestimmten lateralen Versatzes durch eine Steuereinrichtung oder durch eine Regeleinrichtung wird der Vorteil erreicht, dass eine automatisierte bzw. rechnergestützte Erfassung einer Charakteristik des elektromagnetischen Wellenleiters durchgeführt werden kann.

Gemäß einer Ausführungsform werden der vorbestimmte Einkoppelwinkel oder ein vorbestimmter lateraler Versatz, beispielsweise der vorgenannte vorbestimmte laterale Versatz, beim Einkoppeln des elektromagnetischen Welleneingangssignals durch ein wellenfokussierendes und/oder wellenbrechendes Element eingestellt.

Durch ein wellenfokussierendes Element kann das elektromagnetische Welleneingangssignal nach der Transmission durch das wellenfokussierende Element in einen Brennpunkt abgebildet werden. Ein wellenfokussierendes Element umfasst beispielsweise eine Linse oder einen Kollimator.

Durch ein wellenbrechendes Element kann die Ausbreitungsrichtung des elektromagnetischen Welleneingangssignals nach der Transmission durch das wellenbrechende Element um einen vorbestimmten Winkel verdreht werden. Somit wird die Ausbreitungsrichtung des elektromagnetischen Welleneingangssignals verändert. Ein wellenbrechendes Element umfasst beispielsweise ein Prisma oder einen Keil. Insbesondere umfasst ein wellenbrechendes Element einen optischen Keil.

Durch den Einsatz eines wellenfokussierenden und/oder wellenbrechenden Elements wird der Vorteil erreicht, dass die Einstellung eines vorbestimmten Einkoppelwinkels oder eines vorbestimmten lateralen Versatzes einfacher erfolgen kann. Beispielsweise kann die Einstellung eines Winkels oder die Einstellung eines Versatzes zwischen dem elektromagnetischen Wellenleiter und dem weiteren elektromagnetischen Wellenleiter vermieden werden.

Ein vorbestimmter Einkoppelwinkel oder ein vorbestimmter lateraler Versatz können zudem durch die geometrische Form des wellenfokussierenden und/oder wellenbrechenden Elements eingestellt werden.

Darüber hinaus kann das wellenfokussierende und/oder wellenbrechende Element eine reihenförmige Anordnung und/oder eine parallele Anordnung einer Mehrzahl von wellenfokussierenden und/oder wellenbrechenden Elementen umfassen.

Das wellenfokussierende und/oder wellenbrechende Element kann auch bewegt werden. Die Bewegung umfasst insbesondere eine Verschiebung und/oder eine Drehung.

Das wellenfokussierende und/oder wellenbrechende Element kann ein alternatives oder zusätzliches Mittel zur Einstellung eines vorbestimmten Einkoppelwinkels oder eines vorbestimmten lateralen Versatzes sein. Insbesondere kann der Einsatz eines wellenfokussierenden und/oder wellenbrechenden Elements mit dem Einsatz eines mechanischen Stellglieds oder elektromechanischen Stellglieds kombiniert werden.

Gemäß einer Ausführungsform ist die Charakteristik des elektromagnetischen Wellenleiters eine Laufzeit oder eine differentielle Modenverzögerung, eine Signaldämpfung, eine Modendispersion oder eine Pulsverbreiterung.

Die Charakteristik eines elektromagnetischen Wellenleiters kann beispielsweise mittels einer DMD-Messung bestimmt werden. Dadurch wird der Vorteil erreicht, dass auf ein standardisiertes Messverfahren zur Erfassung der Charakteristik des elektromagnetischen Wellenleiters zurückgegriffen werden kann. Das Verfahren realisiert somit eine DMD-Messung mit einer zusätzlichen Verkippung, welche durch den vorbestimmten Einkoppelwinkel vorgegeben wird.

Die Charakteristik eines elektromagnetischen Wellenleiters kann durch eine Laufzeitmessung realisiert werden. Hierzu kann eine Messung der Pulsverbreiterung durchgeführt werden. Die Pulsverbreiterung kann durch Intramodendispersion oder chromatische Dispersion entstehen. Meist entsteht die Pulsverbreiterung jedoch dadurch, dass mehr als nur eine Mode angeregt wird und so die Laufzeiten zwischen diesen Moden zu einer Pulsverbreiterung führen.

Gemäß einer Ausführungsform ist die Charakteristik des elektromagnetischen Wellenleiters eine Laufzeit oder eine differentielle Modenverzögerung oder eine Pulsverbreiterung, wobei zum Erfassen der Laufzeit oder der differentiellen Modenverzögerung oder der Pulsverbreiterung ein Zeitunterschied zwischen einem Empfang des elektromagnetischen Wellenausgangssignals und einem Empfang eines Referenzsignals bestimmt wird.

Das Erfassen einer Laufzeit umfasst die Bestimmung eines Zeitunterschieds zwischen einem Empfang eines elektromagnetischen Wellenausgangssignals und einem Empfang eines Referenzsignals.

Das Erfassen einer differentiellen Modenverzögerung umfasst die Bestimmung eines Zeitunterschieds zwischen einem Empfang eines elektromagnetischen Wellenausgangssignals und einem Empfang eines Referenzsignals, wobei das Erfassen selektiv für eine oder eine Mehrzahl von Wellenleiterausbreitungsmoden durchgeführt wird.

Das Referenzsignal kann durch das elektromagnetische Welleneingangssignal gebildet sein oder vom elektromagnetischen Welleneingangssignal abgeleitet sein. Das Referenzsignal kann über einen separaten Wellenleiter bereitgestellt werden. Insbesondere kann das Referenzsignal über eine elektrische Leitung bereitgestellt werden. Das Referenzsignal umfasst darüber hinaus ein Auslösesignal bzw. Triggersignal, das gleichzeitig mit dem Einkoppeln des elektromagnetischen Welleneingangssignals in den elektromagnetischen Wellenleiter ausgelöst wird.

Das Erfassen der Laufzeit oder der differentiellen Modenverzögerung kann mittels einer DMD-Messung erfolgen.

Gemäß einer Ausführungsform ist die Charakteristik des elektromagnetischen Wellenleiters eine Signaldämpfung, wobei zur Erfassung der Signaldämpfung eine Leistung des elektromagnetischen Wellenausgangssignals bestimmt wird.

Die Signaldämpfung kann beispielsweise eine Leistungsdifferenz zwischen einem Referenzsignal und einem elektromagnetischen Wellenausgangssignal umfassen. Das Referenzsignal kann durch das elektromagnetische Welleneingangssignal gebildet sein oder vom elektromagnetischen Welleneingangssignal abgeleitet sein. Das Referenzsignal kann über einen separaten Wellenleiter bereitgestellt werden. Insbesondere kann das Referenzsignal über eine elektrische Leitung bereitgestellt werden.

Die Bestimmung der Leistung kann beispielsweise mittels eines Leistungsdetektors oder mittels einer DMD-Messung erfolgen. Die Bestimmung der Leistung kann selektiv für eine oder eine Mehrzahl von Wellenleiterausbreitungsmoden durchgeführt werden.

Gemäß einer Ausführungsform ist die Charakteristik des elektromagnetischen Wellenleiters eine Modendispersion oder eine Pulsverbreiterung, wobei zur Erfassung der Modendispersion oder der Pulsverbreiterung eine Pulsbreite des elektromagnetischen Wellenausgangssignals bestimmt wird.

Die Modendispersion kann beispielsweise eine Differenz einer Pulsbreite eines elektromagnetischen Wellenausgangssignals und einer Pulsbreite eines Referenzsignals umfassen.

Das Referenzsignal kann durch das elektromagnetische Welleneingangssignal gebildet sein oder vom elektromagnetischen Welleneingangssignal abgeleitet sein. Das Referenzsignal kann über einen separaten Wellenleiter bereitgestellt werden. Insbesondere kann das Referenzsignal über eine elektrische Leitung bereitgestellt werden. Das Referenzsignal umfasst darüber hinaus ein Auslösesignal bzw. Triggersignal, das gleichzeitig mit dem Einkoppeln des elektromagnetischen Welleneingangssignals in den elektromagnetischen Wellenleiter ausgelöst wird.

Die Pulsbreite kann beispielsweise durch einen Schwellwertvergleich bestimmt werden. Ein Schwellwert kann beispielsweise relativ zum zeitlichen Maximum einer Intensität eines elektromagnetischen Welleneingangssignals bestimmt werden. Insbesondere kann der Schwellwert 25 Prozent der maximalen Intensität eines elektromagnetischen Welleneingangssignals betragen. Die Pulsbreite kann als zeitliche Differenz zwischen dem fallenden und steigenden Durchtrittspunkt der zeitlichen Intensität durch den Schwellwertpegel bestimmt werden.

Die Modendispersion kann beispielsweise durch die Auswertung einer Mehrzahl von Wellenleiterausbreitungsgeschwindigkeiten einer zugehörigen Mehrzahl von Wellenleiterausbreitungsmoden bestimmt werden. Eine Modendispersion kann darüber hinaus durch einen Zeitverlauf einer Intensität eines elektromagnetischen Wellenausgangssignals charakterisiert sein.

Das Erfassen der Modendispersion kann mittels einer DMD-Messung erfolgen.

Gemäß einem weiteren Aspekt betrifft die Erfindung eine Messvorrichtung zum Charakterisieren eines elektromagnetischen Wellenleiters mit: einer Einkoppeleinrichtung zum Einkoppeln eines elektromagnetischen Welleneingangssignals in den elektromagnetischen Wellenleiter unter einem vorbestimmten Einkoppelwinkel, welcher sich von 0° unterscheidet, um zumindest eine vorbestimmte Wellenleiterausbreitungsmode in den elektromagnetischen Wellenleiter einzukoppeln; und einer Erfassungseinrichtung zum Erfassen einer Charakteristik des elektromagnetischen Wellenleiters auf der Basis eines elektromagnetischen Wellenausgangssignals.

Durch die beschriebene Messvorrichtung ist es möglich, eines oder mehrere der vorgenannten Verfahren auszuführen.

Gemäß einer Ausführungsform ist die Einkoppeleinrichtung ferner ausgebildet, das elektromagnetische Welleneingangssignal unter einem vorbestimmten lateralen Versatz in den elektromagnetischen Wellenleiter einzukoppeln.

Durch die beschriebene Ausbildung der Einkoppeleinrichtung wird der Vorteil erreicht, dass weitere der vorgenannten Verfahren ausgeführt werden können.

Weitere Merkmale der Messvorrichtung ergeben sich unmittelbar aus den Merkmalen des Verfahrens zum Charakterisieren des elektromagnetischen Wellenleiters.

BESCHREIBUNG DER FIGUREN

Weitere Ausführungsbeispiele werden bezugnehmend auf die beiliegenden Zeichnungen näher erläutert. Es zeigen:

Fig. 1     ein Ablaufdiagramm eines Verfahrens zum Charakterisieren eines elektromagnetischen Wellenleiters gemäß einer Ausführungsform;

Fig. 2     einen elektromagnetischen Wellenleiter im Querschnitt gemäß einer Ausführungsform;

Fig. 3     eine Einkoppelstruktur zum Einkoppeln eines elektromagnetischen Welleneingangssignals in einen elektromagnetischen Wellenleiter mittels eines mechanischen oder elektromechanischen Stellglieds gemäß einer Ausführungsform;

Fig. 4     eine Einkoppelstruktur zum Einkoppeln eines elektromagnetischen Welleneingangssignals in einen elektromagnetischen Wellenleiter mittels eines wellenfokussierenden und/oder wellenbrechenden Elements gemäß einer Ausführungsform;

Fig. 5     eine schematische Darstellung einer Messvorrichtung gemäß einer Ausführungsform;

Fig. 6a    eine schematische Darstellung einer Einkoppeleinrichtung zum Einkoppeln eines elektromagnetischen Welleneingangssignals in einen elektromagnetischen Wellenleiter mittels eines mechanischen oder elektromechanischen Stellglieds gemäß einer Ausführungsform;

Fig. 6b    eine schematische Darstellung einer Einkoppeleinrichtung zum Einkoppeln eines elektromagnetischen Welleneingangssignals in einen elektromagnetischen Wellenleiter mittels eines mechanischen oder elektromechanischen Stellglieds gemäß einer Ausführungsform;

Fig. 6c    eine schematische Darstellung einer Einkoppeleinrichtung zum Einkoppeln eines elektromagnetischen Welleneingangssignals in einen elektromagnetischen Wellenleiter mittels eines wellenfokussierenden und/oder wellenbrechenden Elements gemäß einer Ausführungsform;

Fig. 7a    ein Konturdiagramm von Koppelkoeffizienten in Abhängigkeit einer Wellenleiterausbreitungsmodengruppe und einer Umfangsordnung für einen vorbestimmten Einkoppelwinkel und einen vorbestimmten lateralen Versatz gemäß einer Ausführungsform;

Fig. 7b    ein Konturdiagramm von Koppelkoeffizienten in Abhängigkeit einer Wellenleiterausbreitungsmodengruppe und einer Umfangsordnung für einen vorbestimmten Einkoppelwinkel und einen vorbestimmten lateralen Versatz gemäß einer Ausführungsform;

Fig. 7c    ein Konturdiagramm von Koppelkoeffizienten in Abhängigkeit einer Wellenleiterausbreitungsmodengruppe und einer Umfangsordnung für einen vorbestimmten Einkoppelwinkel und einen vorbestimmten lateralen Versatz gemäß einer Ausführungsform;

Fig. 7d    ein Konturdiagramm von Koppelkoeffizienten in Abhängigkeit einer Wellenleiterausbreitungsmodengruppe und einer Umfangsordnung für einen vorbestimmten Einkoppelwinkel und einen vorbestimmten lateralen Versatz gemäß einer Ausführungsform;

Fig. 8a     ein Konturdiagramm von Koppelkoeffizienten in Abhängigkeit einer Wellenleiterausbreitungsmodengruppe und einer Umfangsordnung für einen vorbestimmten Einkoppelwinkel und einen vorbestimmten lateralen Versatz gemäß einer Ausführungsform;

Fig. 8b     ein Konturdiagramm von Koppelkoeffizienten in Abhängigkeit einer Wellenleiterausbreitungsmodengruppe und einer Umfangsordnung für einen vorbestimmten Einkoppelwinkel und einen vorbestimmten lateralen Versatz gemäß einer Ausführungsform;

Fig. 8c     ein Konturdiagramm von Koppelkoeffizienten in Abhängigkeit einer Wellenleiterausbreitungsmodengruppe und einer Umfangsordnung für einen vorbestimmten Einkoppelwinkel und einen vorbestimmten lateralen Versatz gemäß einer Ausführungsform;

Fig. 8d     ein Konturdiagramm von Koppelkoeffizienten in Abhängigkeit einer Wellenleiterausbreitungsmodengruppe und einer Umfangsordnung für einen vorbestimmten Einkoppelwinkel und einen vorbestimmten lateralen Versatz gemäß einer Ausführungsform;

Fig. 9     ein Diagramm eines vorbestimmten Einkoppelwinkels und eines Akzeptanzwinkels in Abhängigkeit eines relativen vorbestimmten lateralen Versatzes gemäß einer Ausführungsform; und

Fig. 10     eine schematische Darstellung einer Messvorrichtung nach dem Differential-Mode-Delay (DMD) Messprinzip gemäß einer Ausführungsform.

## DETAILIERTE BESCHREIBUNG

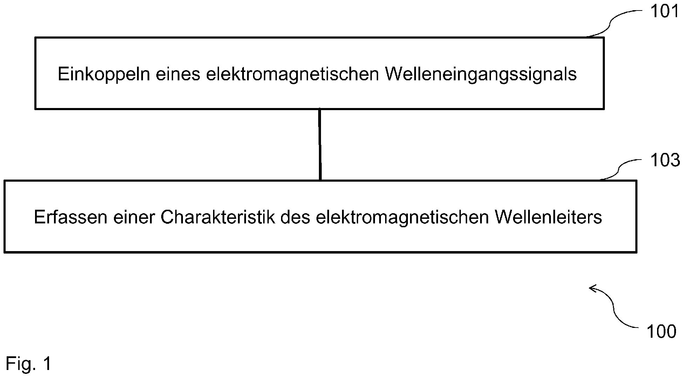

Fig. 1 zeigt ein Ablaufdiagramm eines Verfahrens 100 zum Charakterisieren eines elektromagnetischen Wellenleiters gemäß einer Ausführungsform.

Das Verfahren 100 umfasst das Einkoppeln 101 eines elektromagnetischen Welleneingangssignals in den elektromagnetischen Wellenleiter unter einem vorbestimmten Einkoppelwinkel, welcher sich von 0° unterscheidet, um zumindest eine vorbestimmte Wellenleiterausbreitungsmode in den elektromagnetischen Wellenleiter einzukoppeln. Darüber hinaus umfasst das Verfahren das Erfassen 103 einer Charakteristik des elektromagnetischen Wellenleiters auf der Basis eines elektromagnetischen Wellenausgangssignals.

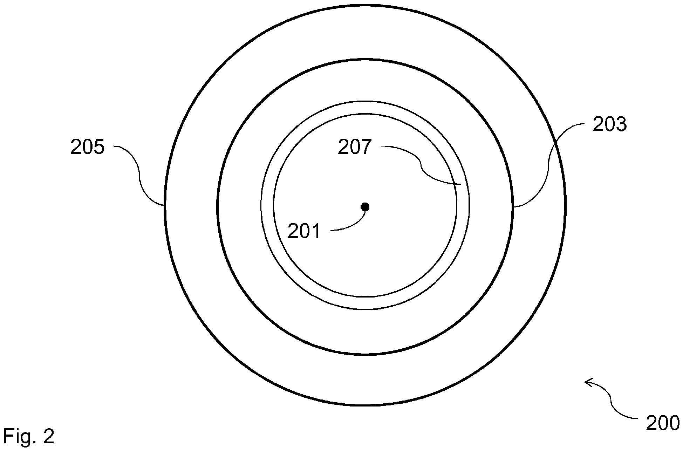

Fig. 2 zeigt einen elektromagnetischen Wellenleiter 200 im Querschnitt gemäß einer Ausführungsform. Der Querschnitt ist in diesem Ausführungsbeispiel kreisscheibenförmig ausgebildet. Der elektromagnetische Wellenleiter 200 kann über eine Ausbreitungsrichtung 201, eine Kern-Mantel-Grenzfläche 203 und eine Mantelgrenzfläche 205 verfügen. Eine Feldintensitätsverteilung 207 kann im elektromagnetischen Wellenleiter 200 ausgebildet sein.

Die Ausbreitungsrichtung 201 definiert die Ausbreitungsrichtung der elektromagnetischen Wellen, insbesondere des elektromagnetischen Welleneingangssignals und des elektromagnetischen Wellenausgangssignals, im elektromagnetischen Wellenleiter 200.

Der Volumenbereich innerhalb der Kern-Mantel-Grenzfläche 203 definiert den Kern des elektromagnetischen Wellenleiters 200 und kann über ortsabhängige Materialeigenschaften verfügen. Die Ortsabhängigkeit kann insbesondere eine Radiusabhängigkeit umfassen. Die Materialeigenschaften können insbesondere eine lokale Brechzahl umfassen. Die ortsabhängigen Materialeigenschaften können insbesondere ein Gradientenindex-Brechzahlprofil umfassen.

Der Volumenbereich zwischen Kern-Mantel-Grenzfläche 203 und Mantelgrenzfläche 205 realisiert den Mantel des elektromagnetischen Wellenleiters 200. Der Mantelbereich kann über ortsunabhängige Materialeigenschaften verfügen.

Eine Feldintensitätsverteilung 207 kann durch eine innere Kaustik und eine äußere Kaustik definiert sein. Eine mögliche Feldintensitätsverteilung 207 kann durch eine ringförmige Feldintensitätsverteilung 207 gegeben sein, bei der die innere Kaustik und die äußere Kaustik ungefähr denselben Wert aufweisen. Das elektromagnetische Feld kann innerhalb dieser Fläche überwiegende oder maximale Feldintensitätswerte annehmen. Die ringförmige Feldintensitätsverteilung 207 kann durch ein vorgenanntes Verfahren erzeugt werden und ermöglicht das Charakterisieren des elektromagnetischen Wellenleiters 200 in Abhängigkeit des Radius.

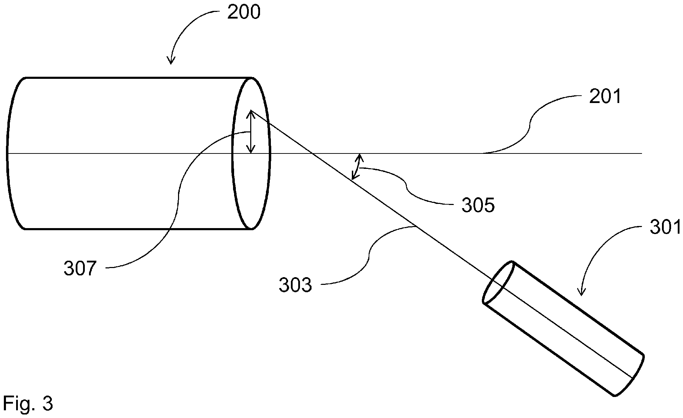

Fig. 3 zeigt eine Einkoppelstruktur zum Einkoppeln 101 eines elektromagnetischen Welleneingangssignals in einen elektromagnetischen Wellenleiter 200 mittels eines mechanischen oder elektromechanischen Stellglieds gemäß einer Ausführungsform. Der elektromagnetische Wellenleiter 200 ist mit der zugehörigen Ausbreitungsrichtung 201 dargestellt. Darüber hinaus ist ein weiterer elektromagnetischer Wellenleiter 301 mit zugehöriger Ausbreitungsrichtung 303 dargestellt. Der vorbestimmte Einkoppelwinkel 305 und der vorbestimmte laterale Versatz 307 sind für dieses Ausführungsbeispiel exemplarisch eingezeichnet.

Der weitere elektromagnetische Wellenleiter 301 stellt das Welleneingangssignal für den elektromagnetischen Wellenleiter 200 bereit und kann insbesondere als Singlemode-Glasfaser ausgebildet sein.

Der vorbestimmte Einkoppelwinkel 305 und der vorbestimmte laterale Versatz 307 können durch die gegenseitige räumliche Lage der Ausbreitungsrichtung 201 des elektromagnetischen Wellenleiter 200 und der Ausbreitungsrichtung 303 des weiteren elektromagnetischen Wellenleiters 301 bestimmt sein. Der laterale Versatz 307 kann insbesondere aus der Verkippungsebene der vorbestimmten Einkoppelwinkel 305 heraus gebildet sein. Wenn beispielsweise der vorbestimmte laterale Versatz 307 in Richtung der x-Koordinate erfolgt, dann kann die Verkippung des vorbestimmten Einkoppelwinkels 305 beispielsweise in Richtung der y-Koordinate erfolgen. Die x-Koordinate und die y-Koordinate können durch ein kartesisches Koordinatensystem gebildet sein.

Die Ausbreitungsrichtung 201 des elektromagnetischen Wellenleiters 200 und die Ausbreitungsrichtung 303 des weiteren elektromagnetischen Wellenleiters 301 können windschief zueinander liegen. Die Ausbreitungsrichtung 303 des weiteren elektromagnetischen Wellenleiters 301 kann mit der Ausbreitungsrichtung des elektromagnetischen Welleneingangssignals identisch sein.

Der vorbestimmte Einkoppelwinkel 305 und der vorbestimmte laterale Versatz 307 können durch ein mechanisches Stellglied oder ein elektromechanisches Stellglied eingestellt werden. Das mechanische Stellglied oder das elektromechanische Stellglied können ausgebildet sein, die Lage der Ausbreitungsrichtung 201 des elektromagnetischen Wellenleiters 200 und die Lage der Ausbreitungsrichtung 303 des weiteren elektromagnetischen Wellenleiters 301 zueinander zu verstellen.

Die Einstellung des vorbestimmten Einkoppelwinkels 305 und des vorbestimmten lateralen Versatzes 307 kann mittels einer Steuereinrichtung gesteuert oder mittels einer Regeleinrichtung geregelt werden.

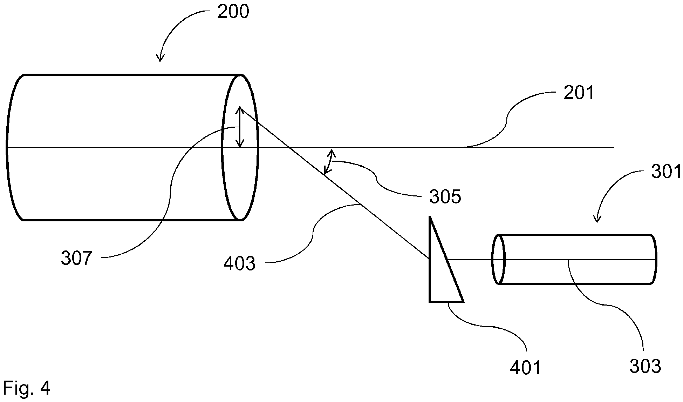

Fig. 4 zeigt eine Einkoppelstruktur zum Einkoppeln 101 eines elektromagnetischen Welleneingangssignals in einen elektromagnetischen Wellenleiter 200 mittels eines wellenfokussierenden und/oder wellenbrechenden Elements 401 gemäß einer Ausführungsform. Der elektromagnetische Wellenleiter 200 ist mit der zugehörigen Ausbreitungsrichtung 201 dargestellt. Darüber hinaus ist ein weiterer elektromagnetischer Wellenleiter 301 mit zugehöriger Ausbreitungsrichtung 303 dargestellt. Der vorbestimmte Einkoppelwinkel 305 und der vorbestimmte laterale Versatz 307 sind für dieses Ausführungsbeispiel exemplarisch eingezeichnet. Zudem sind ein wellenfokussierendes und/oder wellenbrechendes Element 401 sowie eine gebrochene Ausbreitungsrichtung 403 dargestellt.

Durch die Form des wellenfokussierenden und/oder wellenbrechenden Elements 401 kann die Ausbreitungsrichtung 303 des weiteren elektromagnetischen Wellenleiters 301 in eine gebrochene Ausbreitungsrichtung 403 überführt werden. Die Ausbreitungsrichtung des Welleneingangssignals kann mit der gebrochenen Ausbreitungsrichtung 403 identisch sein.

Durch den Einsatz eines wellenfokussierenden und/oder wellenbrechenden Elements 401 wird der Vorteil erreicht, dass die Einstellung eines vorbestimmten Einkoppelwinkels 305 oder eines vorbestimmten lateralen Versatzes 307 einfacher erfolgen kann. Beispielsweise kann die Einstellung eines Winkels oder die Einstellung eines Versatzes zwischen dem elektromagnetischen Wellenleiter und dem weiteren elektromagnetischen Wellenleiter vermieden werden. In diesem Ausführungsbeispiel ist lediglich eine Einstellung eines Versatzes zwischen dem elektromagnetischen Wellenleiter und dem weiteren elektromagnetischen Wellenleiter erforderlich.

Das wellenfokussierende und/oder wellenbrechende Element 401 umfasst beispielsweise einen optischen Keil.

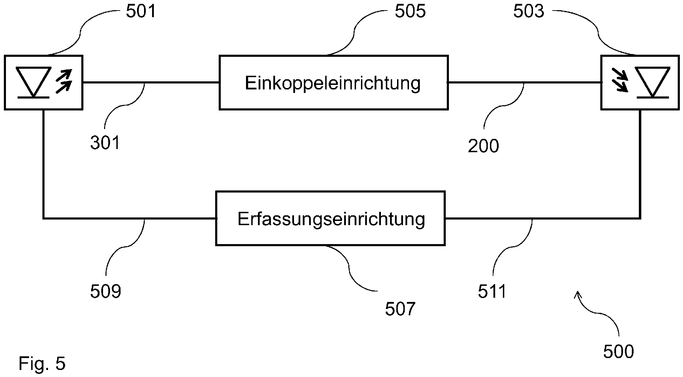

Fig. 5 zeigt eine schematische Darstellung einer Messvorrichtung 500 gemäß einer Ausführungsform. Die Messvorrichtung 500 umfasst eine elektromagnetische Wellenquelle 501, einen elektromagnetischen Wellendetektor 503, eine Einkoppeleinrichtung 505 sowie eine Erfassungseinrichtung 507. Zudem sind eine Leitung für ein Referenzsignal 509 und eine Leitung für ein Messsignal 511 dargestellt. Der elektromagnetische Wellenleiter 200 und der weitere elektromagnetische Wellenleiter 301 sind an die Einkoppeleinrichtung 505 angeschlossen.

Die elektromagnetische Wellenquelle 501 ist an den weiteren elektromagnetischen Wellenleiter 301 angeschlossen und stellt ein elektromagnetisches Wellensignal bereit, welches in dem weiteren elektromagnetischen Wellenleiter 301 ausbreitungsfähig ist. Die elektromagnetische Wellenquelle 501 kann beispielsweise eine Wellenquelle für Mikrowellen, Millimeterwellen oder Submillimeterwellen umfassen. Darüber hinaus kann die elektromagnetische Wellenquelle 501 beispielsweise eine Wellenquelle für sichtbare oder unsichtbare Laserstrahlen, insbesondere eine Laserdiode oder einen Vertical Cavity Surface Emitting Laser (VCSEL), umfassen.

Der elektromagnetische Wellendetektor 503 ist an den elektromagnetischen Wellenleiter 200 angeschlossen und detektiert ein elektromagnetisches Wellensignal, welches durch den elektromagnetischen Wellenleiter 200 transmittiert wird. Der elektromagnetische Wellendetektor 503 kann beispielsweise einen Wellendetektor für Mikrowellen, Millimeterwellen oder Submillimeterwellen umfassen. Darüber hinaus kann der elektromagnetische Wellendetektor 503 beispielsweise ein Detektor für sichtbare oder unsichtbare Laserstahlen, insbesondere eine Fotodiode oder ein Charge Coupled Device (CCD) umfassen.

Die Einkoppeleinrichtung 505 ist ausgebildet, ein Einkoppeln 101 eines elektromagnetischen Welleneingangssignals in den elektromagnetischen Wellenleiter 200 unter einem vorbestimmten Einkoppelwinkel 305, welcher sich von 0° unterscheidet, durchzuführen, um zumindest eine vorbestimmte Wellenleiterausbreitungsmode in den elektromagnetischen Wellenleiter 200 einzukoppeln. Die Einkoppeleinrichtung 505 kann beispielsweise mittels eines mechanischen oder elektromechanischen Stellglieds realisiert werden. Die Einkoppeleinrichtung 505 kann zudem eine Steuereinrichtung oder eine Regeleinrichtung zur Steuerung oder Regelung des mechanischen oder elektromechanischen Stellglieds umfassen. Darüber hinaus kann die Einkoppeleinrichtung mittels eines wellenfokussierenden und/oder wellenbrechenden Elements 401 realisiert werden.

Die Erfassungseinrichtung 507 ist ausgebildet, ein Erfassen 103 einer Charakteristik des elektromagnetischen Wellenleiters 200 auf der Basis eines elektromagnetischen Wellenausgangssignals durchzuführen. Die Charakteristik des elektromagnetischen Wellenleiters 200 kann beispielsweise eine Laufzeit oder eine differentielle Modenverzögerung, eine Signaldämpfung, eine Modendispersion oder eine Pulsverbreiterung sein. Die Charakteristik eines elektromagnetischen Wellenleiters 200 kann beispielsweise mittels einer Differential-Mode-Delay-Messung (DMD-Messung) bestimmt werden. Darüber hinaus kann das Erfassen 103 einer Charakteristik des elektromagnetischen Wellenleiters 200 auf der Basis eines elektromagnetischen Wellenausgangssignals einen Empfang eines Referenzsignals und/oder einen Empfang eines Messsignals umfassen.

Die Leitung für ein Referenzsignal 509 kann ein Referenzsignal für die Erfassungseinrichtung 507 bereitstellen. Das Referenzsignal kann von der elektromagnetischen Wellenquelle 501 erzeugt werden. Das Referenzsignal kann das elektromagnetische Welleneingangssignal umfassen oder vom elektromagnetischen Welleneingangssignal abgeleitet sein. Die Leitung für ein Referenzsignal 509 kann insbesondere eine elektrische oder optische Leitung umfassen.

Die Leitung für ein Messsignal 511 kann ein Messsignal für die Erfassungseinrichtung 507 bereitstellen. Das Messsignal kann von dem elektromagnetischen Wellendetektor 503 erzeugt oder abgeleitet werden. Das Messsignal kann das elektromagnetische Wellenausgangssignal umfassen oder vom elektromagnetischen Wellenausgangssignal abgeleitet sein. Die Leitung für ein Messsignal 511 kann insbesondere eine elektrische oder optische Leitung umfassen.

Gemäß einem Ausführungsbeispiel kann ein Messvorgang beispielsweise folgendermaßen durchgeführt werden:
Die elektromagnetische Wellenquelle 501 erzeugt ein Wellensignal, welches in den weiteren elektromagnetischen Wellenleiter 301 eingespeist und zur Einkoppeleinrichtung 505 übertragen wird. Gleichzeitig erzeugt die elektromagnetische Wellenquelle 501 ein Referenzsignal, welches in die Leitung für das Referenzsignal 509 eingespeist und zur Erfassungseinrichtung 507 übertragen wird.

Die Einkoppeleinrichtung 505 koppelt das Wellensignal, welches als Welleneingangssignal dient, unter einem vorbestimmen Einkoppelwinkel 305 oder einem vorbestimmten lateralen Versatz 307 in den elektromagnetischen Wellenleiter 200 ein. Das Wellensignal wird durch den elektromagnetischen Wellenleiter 200 übertragen und als Wellenausgangssignal vom elektromagnetischen Wellendetektor 503 detektiert. Der elektromagnetische Wellendetektor 503 leitet daraus ein Messsignal ab, welches in die Leitung für das Messsignal 511 eingespeist und zur Erfassungseinrichtung 507 übertragen wird.

Die Erfassungseinrichtung 507 wertet das Referenzsignal und/oder das Messsignal aus, um eine Charakteristik des elektromagnetischen Wellenleiters 200 auf der Basis des elektromagnetischen Wellenausgangssignals zu erfassen. Die Auswertung kann beispielsweise gemäß einem DMD-Messverfahren erfolgen.

Das Verfahren beruht, gemäß einer Ausführungsform, auf der selektiven Anregung einzelner Wellenleiterausbreitungsmodengruppen und der Messung ihrer Gruppenlaufzeit, wie auch bei der konventionellen DMD-Messung. Allerdings enthält das Verfahren die Modifikation, dass gezielt die Wellenleiterausbreitungsmoden mit höherer Umfangsordnung angeregt werden. Diese Wellenleiterausbreitungsmoden können eine örtlich sehr konzentrierte Feldverteilung bzw. Feldintensitätsverteilung 207 aufweisen, wobei sich die örtlich sehr konzentrierte Feldverteilung bzw. Feldintensitätsverteilung 207 auf einen schmalen ringförmigen Bereich beschränkt. Dieser Bereich ist durch die sogenannte innere und äußere Kaustik beschränkt, die den kleinsten bzw. größten Radius beschreiben, die die Feldverteilung beansprucht. Durch die sehr konzentrierte Feldverteilung in einem begrenzten Bereich des Brechzahlprofils kann somit der Verlauf des Profils direkt abgetastet werden durch die Anregung von Wellenleiterausbreitungsmoden, die vornehmlich durch diesen beschränkten Profilbereich beeinflusst werden. Im Gegensatz zur konventionellen DMD-Messung, bei der die Laufzeiten der durch seitlichen Versatz angeregten Wellenleiterausbreitungsmoden immer auch vom inneren Bereich des Brechzahlprofils um die Wellenleiterachse beeinflusst werden, werden mit dem Verfahren also nur die Wellenleiterausbreitungsmoden angeregt, deren Laufzeiten ausschließlich durch den Bereich des Brechzahlprofils beeinflusst werden, der gerade gemessen werden soll.

Die bei dem Verfahren gemessenen Laufzeiten erlauben somit einen direkten Rückschluss auf das Brechzahlprofil des elektromagnetischen Wellenleiters 200. Die äußere Kaustik $r_a$ ist vornehmlich durch den vorbestimmten lateralen Versatz 307 bzw. seitlichen Versatz $\Delta x$ bestimmt, die innere Kaustik $r_i$ kann durch einen vorbestimmten Einkoppelwinkel 305 bzw. eine gezielte Verkippung $\Delta \varphi$ in der Ebene orthogonal zum vorbestimmten lateralen Versatz 307 bzw. seitlichen Versatz gesteuert werden. Um eine Anregung von örtlich möglichst konzentrierten Wellenleiterausbreitungsmoden zu erreichen, wird daher anstelle des ausschließlichen vorbestimmten lateralen Versatzes 307 bzw. seitlichen Versatzes zusätzlich eine Verkippung unter einem vorbestimmten Einkoppelwinkel 305 des anregenden weiteren elektromagnetischen Wellenleiters vorgeschlagen. Wenn nun der vorbestimmte laterale Versatz 307 bzw. seitliche Versatz in x-Richtung erfolgt, kann die Verkippung unter einem vorbestimmten Einkoppelwinkel 305 z. B. in y-Richtung erfolgen.

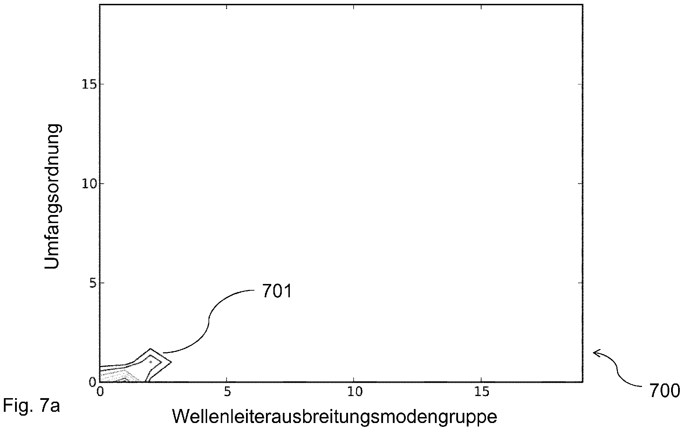

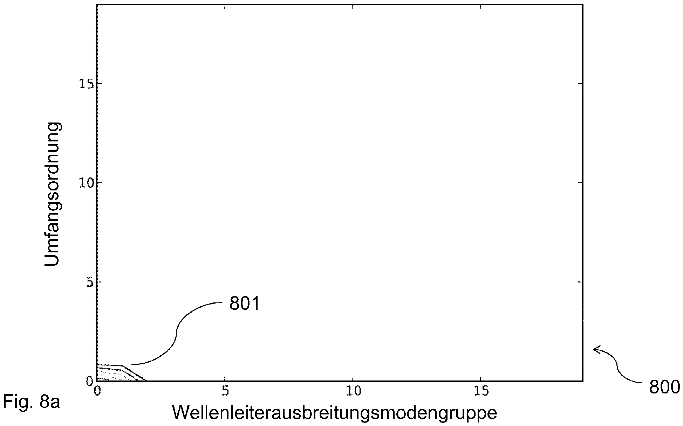

Die dadurch erzielbare Anregung von Wellenleiterausbreitungsmoden höherer Umfangsordnung wird im Vergleich zur konventionellen DMD-Anregung in Fig. 7a-d und Fig. 8a-d aufgezeigt.

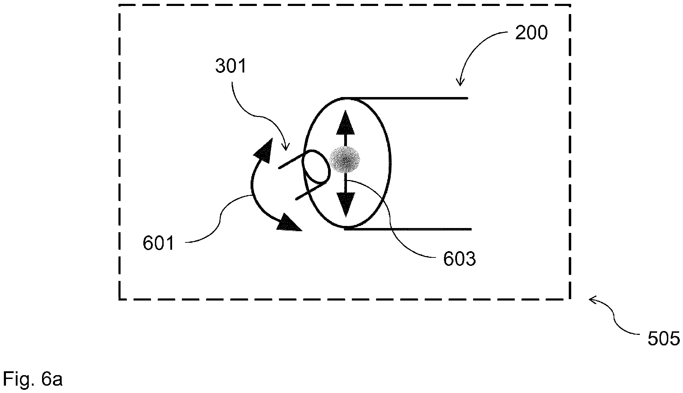

Fig. 6a zeigt eine schematische Darstellung einer Einkoppeleinrichtung 505 zum Einkoppeln 101 eines elektromagnetischen Welleneingangssignals in einen elektromagnetischen Wellenleiter 200 mittels eines mechanischen oder elektromechanischen Stellglieds gemäß einer Ausführungsform.

Das elektromagnetische Welleneingangssignal wird in diesem Ausführungsbeispiel von einem weiteren elektromagnetischen Wellenleiter 301 bereitgestellt. Durch ein mechanisches oder elektromechanisches Stellglied kann ein Winkel 601 zwischen dem elektromagnetischen Wellenleiter 200 und dem weiteren elektromagnetischen Wellenleiter 301 und/oder ein Versatz 603 zwischen dem elektromagnetischen Wellenleiter 200 und dem weiteren elektromagnetischen Wellenleiter 301 eingestellt werden.

Die Einstellung des Winkels 601 und/oder des Versatzes 603 wird in diesem Ausführungsbeispiel durch eine Bewegung des weiteren elektromagnetischen Wellenleiters 301 erreicht.

In Fig. 6a wird somit auch das Prinzip der Anregung mit vorbestimmtem lateralem Versatz 307 bzw. seitlichem Versatz und zusätzlicher Verkippung unter einem vorbestimmten Einkoppelwinkel 305 des anregenden elektromagnetischen Wellenleiters verdeutlicht.

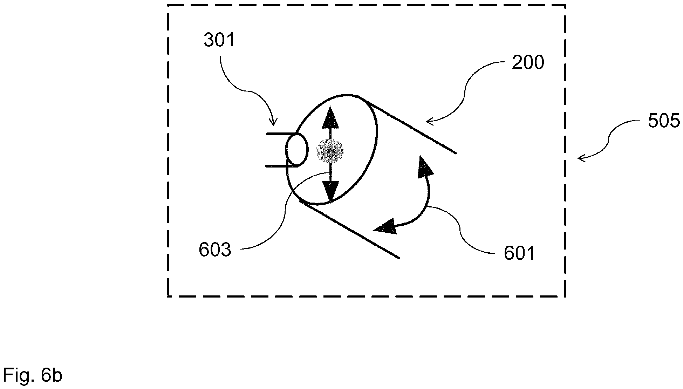

Fig. 6b zeigt eine schematische Darstellung einer Einkoppeleinrichtung 505 zum Einkoppeln 101 eines elektromagnetischen Welleneingangssignals in einen elektromagnetischen Wellenleiter 200 mittels eines mechanischen oder elektromechanischen Stellglieds gemäß einer Ausführungsform.

Das elektromagnetische Welleneingangssignal wird in diesem Ausführungsbeispiel von einem weiteren elektromagnetischen Wellenleiter 301 bereitgestellt. Durch ein mechanisches oder elektromechanisches Stellglied kann ein Winkel 601 zwischen dem elektromagnetischen Wellenleiter 200 und dem weiteren elektromagnetischen Wellenleiter 301 und/oder ein Versatz 603 zwischen dem elektromagnetischen Wellenleiter 200 und dem weiteren elektromagnetischen Wellenleiter 301 eingestellt werden.

Die Einstellung des Winkels 601 und/oder des Versatzes 603 wird in diesem Ausführungsbeispiel durch eine Bewegung des elektromagnetischen Wellenleiters 200 erreicht.

In Fig. 6b wird somit auch das Prinzip der Anregung mit vorbestimmtem lateralem Versatz 307 bzw. seitlichem Versatz und zusätzlicher Verkippung unter einem vorbestimmten Einkoppelwinkel 305 des zu charakterisierenden elektromagnetischen Wellenleiters verdeutlicht.

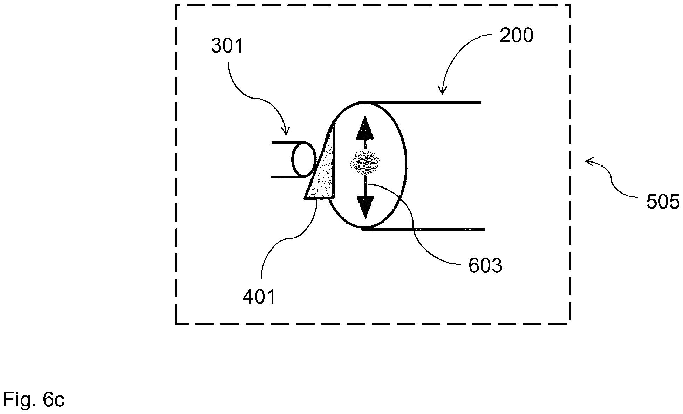

Fig. 6c zeigt eine schematische Darstellung einer Einkoppeleinrichtung 505 zum Einkoppeln 101 eines elektromagnetischen Welleneingangssignals in einen elektromagnetischen Wellenleiter 200 mittels eines wellenfokussierenden und/oder wellenbrechenden Elements 401 gemäß einer Ausführungsform.

Das elektromagnetische Welleneingangssignal wird in diesem Ausführungsbeispiel von einem weiteren elektromagnetischen Wellenleiter 301 bereitgestellt. Durch die Verwendung eines wellenfokussierenden und/oder wellenbrechenden Elements 401, welches in diesem Ausführungsbeispiel ein Keil mit Brechzahl $n > 1$ ist, kann eine Verkippung der Phasenfront und somit eine Änderung der Ausbreitungsrichtung des elektromagnetischen Welleneingangssignals erreicht werden. Darüber hinaus kann ein Versatz 603 zwischen dem elektromagnetischen Wellenleiter 200 und dem weiteren elektromagnetischen Wellenleiter 301 eingestellt werden.

In Fig. 6c wird somit das Prinzip der Anregung mit vorbestimmtem lateralem Versatz 307 bzw. seitlichem Versatz und zusätzlicher Verkippung der Phasenfront der Anregung unter einem vorbestimmten Einkoppelwinkel 305 durch Einbringen eines Keils mit höherer Brechzahl verdeutlicht.

Die Verkippung unter dem vorbestimmten Einkoppelwinkel 305 lässt sich also auf mehrere Arten erreichen. Fig.6a-c bezeichnen dabei exemplarisch drei Ausführungsbeispiele. Die direkteste Methode zum Einbringen einer Verkippung besteht darin, den weiteren elektromagnetischen Wellenleiter 301, der zur Anregung dient und unter einem vorbestimmten lateralen Versatz 307 bzw. seitlich verschoben wird, zusätzlich rechtwinklig zum vorbestimmten lateralen Versatz 307 bzw. seitlichen Versatz unter einem vorbestimmten Einkoppelwinkel 305 zu verkippen. Fig. 6a zeigt eine schematische Darstellung einer Einkoppeleinrichtung 505 gemäß dieser Methode. Hierzu muss auf die Verschiebeeinheit, die zur Einbringung des vorbestimmten lateralen Versatzes 307 bzw. seitlichen Versatzes dient, eine zusätzliche Einheit montiert werden, die die Verkippung des weiteren elektromagnetischen Wellenleiters 301 unter einem vorbestimmten Einkoppelwinkel 305 herbeiführt.

In derselben Art und Weise kann anstatt des anregenden weiteren elektromagnetischen Wellenleiters 301 auch der anzuregende elektromagnetische Wellenleiter 200 unter einem vorbestimmten Einkoppelwinkel 305 verkippt werden. Das hat den Vorteil, dass die zusätzlich benötigte Dreheinheit nicht bewegt werden muss, sondern fest auf der den anregenden weiteren elektromagnetischen Wellenleiter 301 gegenüber liegenden Seite stehen kann. Figur 6b zeigt eine schematische Darstellung einer Einkoppeleinrichtung 505 gemäß dieser Methode.

Neben den oben genannten Methoden kann die Verkippung der Phasenfront unter einem vorbestimmten Einkoppelwinkel 305 auch durch ein wellenfokussierendes und/oder wellenbrechendes Element 401 bzw. einen Keil mit höherer Brechzahl realisiert werden, sodass eine zusätzliche Phasendrehung entsteht, die linear mit dem Ort ansteigt. Die dadurch hervorgerufene Verkippung der Phasenfront unter einem vorbestimmten Einkoppelwinkel 305 ist dann proportional zur Steigung der linearen Phasendrehung über den Ort bzw. proportional zur linear mit dem Ort ansteigenden Dicke des Keils. Figur 6c zeigt eine schematische Darstellung einer Einkoppeleinrichtung 505 gemäß dieser Methode.

Fig. 7a zeigt ein Konturdiagramm 700 von Koppelkoeffizienten in Abhängigkeit einer Wellenleiterausbreitungsmodengruppe und einer Umfangsordnung für einen vorbestimmten Einkoppelwinkel 305 und einen vorbestimmten lateralen Versatz 307 gemäß einer Ausführungsform. Der vorbestimmte Einkoppelwinkel 305 beträgt in diesem Ausführungsbeispiel 2,0°. Der vorbestimmte laterale Versatz 307 beträgt in diesem Ausführungsbeispiel 5,0 μm. Die Koppelkoeffizienten werden durch die Konturlinien 701 dargestellt.

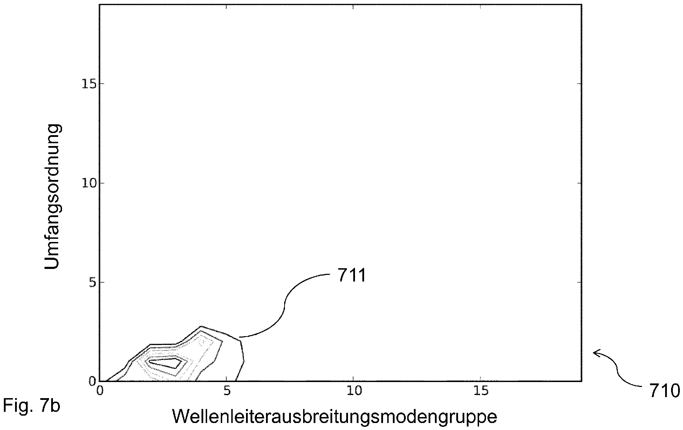

Fig. 7b zeigt ein Konturdiagramm 710 von Koppelkoeffizienten in Abhängigkeit einer Wellenleiterausbreitungsmodengruppe und einer Umfangsordnung für einen vorbestimmten Einkoppelwinkel 305 und einen vorbestimmten lateralen Versatz 307 gemäß einer Ausführungsform. Der vorbestimmte Einkoppelwinkel 305 beträgt in diesem Ausführungsbeispiel 3,6°. Der vorbestimmte laterale Versatz 307 beträgt in diesem Ausführungsbeispiel 10,0 μm. Die Koppelkoeffizienten werden durch die Konturlinien 711 dargestellt.

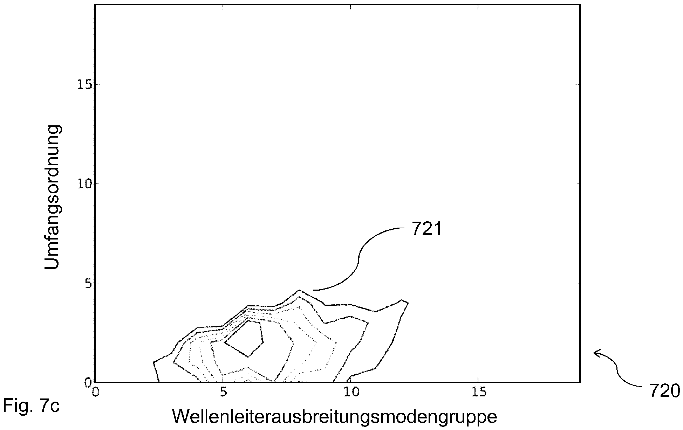

Fig. 7c zeigt ein Konturdiagramm 720 von Koppelkoeffizienten in Abhängigkeit einer Wellenleiterausbreitungsmodengruppe und einer Umfangsordnung für einen vorbestimmten Einkoppelwinkel 305 und einen vorbestimmten lateralen Versatz 307 gemäß einer Ausführungsform. Der vorbestimmte Einkoppelwinkel 305 beträgt in diesem Ausführungsbeispiel 6,2°. Der vorbestimmte laterale Versatz 307 beträgt in diesem Ausführungsbeispiel 15,0 μm. Die Koppelkoeffizienten werden durch die Konturlinien 721 dargestellt.

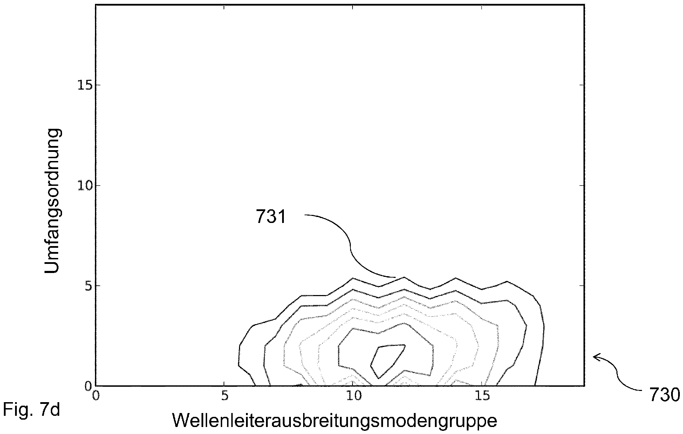

Fig. 7d zeigt ein Konturdiagramm 730 von Koppelkoeffizienten in Abhängigkeit einer Wellenleiterausbreitungsmodengruppe und einer Umfangsordnung für einen vorbestimmten Einkoppelwinkel 305 und einen vorbestimmten lateralen Versatz 307 gemäß einer Ausführungsform. Der vorbestimmte Einkoppelwinkel 305 beträgt in diesem Ausführungsbeispiel 7,0°. Der vorbestimmte laterale Versatz 307 beträgt in diesem Ausführungsbeispiel 20,0 μm. Die Koppelkoeffizienten werden durch die Konturlinien 731 dargestellt.

In Fig. 7a, Fig. 7b , Fig. 7c und Fig. 7d ist somit die Verteilung der Koppelkoeffizienten in Konturdarstellung bei vorbestimmtem lateralem Versatz 307 bzw. seitlichem Versatz mit gleichzeitiger Verkippung unter einem vorbestimmten Einkoppelwinkel 305 dargestellt. Es sind Beispiele für verschiedene vorbestimmte laterale Versatze 307 bzw. seitliche Versatze von 5 μm, 10 μm, 15 μm und 20 μm mit Verkippung unter einem vorbestimmten Einkoppelwinkel 305 von jeweils 2°, 3,6°, 6,2° und 7,0° dargestellt. Für 20 μm vorbestimmten lateralen Versatz 307 bzw. seitlichen Versatz wurde die maximal mögliche Verkippung unter dem vorbestimmten Einkoppelwinkel 305 gewählt.

Die Koppelkoeffizienten stellen gemäß einer Ausführungsform ein Maß für den relativen Anteil der Gesamtleistung einer Wellenleiterausbreitungsmode bzw. einer Mehrzahl von Wellenleiterausbreitungsmoden im elektromagnetischen Wellenleiter 200 bei der Einkopplung dar. In diesen Ausführungsbeispielen werden überwiegend Wellenleiterausbreitungsmoden mit hoher Umfangsordnung einer Wellenleiterausbreitungsmodengruppe angeregt.

Da die Wellenleiterausbreitungsmoden mit hoher Umfangsordnung überwiegend eine ringförmige Feldintensitätsverteilung aufweisen und/oder eine Schiefe bzw. Skewness aufweisen, wird das deutlich verbesserte Charakterisieren des elektromagnetischen Wellenleiters 200 möglich.

Fig. 7a-d verdeutlichen insbesondere, dass die jeweils höheren Wellenleiterausbreitungsmoden einer Wellenleiterausbreitungsmodengruppe mit der höheren Umfangsordnung angeregt werden, die eine nahezu ringförmige Feldintensitätsverteilung 207 bzw. Feldverteilung aufweisen, bei der die Radien der inneren und äußeren Kaustik nahezu gleich sind und somit nur ein sehr kleiner Bereich des Brechzahlprofils von dieser Wellenleiterausbreitungsmode beansprucht wird. Das Verfahren zielt somit darauf ab, möglichst diese Wellenleiterausbreitungsmoden mit höherer Umfangsordnung durch eine Verkippung des weiteren elektromagnetischen Wellenleiters 301 unter einem vorbestimmten Einkoppelwinkel 305 im rechten Winkel zum vorbestimmten lateralen Versatz 307 bzw. seitlichen Versatz anzuregen. Der Vorgang lässt sich so veranschaulichen, dass durch die Verkippung unter einem vorbestimmten Einkoppelwinkel 305 nur noch schraubenförmige Wellenleiterausbreitungsmoden angeregt werden, die eine sogenannte Skewness aufweisen. Es ist zu erkennen, dass es in Abhängigkeit vom vorbestimmten lateralen Versatz 307 bzw. seitlichen Versatz eine spezielle Verkippung unter einem vorbestimmten Einkoppelwinkel 305 $\Delta\varphi(\Delta x)$ gibt, für die ausschließlich Wellenleiterausbreitungsmoden mit hoher Umfangsordnung angeregt werden. Diese Verkippung unter dem vorbestimmten Einkoppelwinkel 305 ist im Zentrum des elektromagnetischen Wellenleiters 200 Null, weil dort ausschließlich der Wellenleiterausbreitungsgrundmode angeregt werden kann, der eine eigene Wellenleiterausbreitungsmodengruppe darstellt. Am Rand des Kerns am Übergang zum Mantel wird die Verkippung unter dem vorbestimmten Einkoppelwinkel 305 dann wieder Null, weil dort der maximale Einkoppelwinkel Null ist auf Grund der lokalen numerischen Apertur, die an der Kern-Mantel-Grenzfläche verschwindet.

Dadurch wird der Vorteil des Einkoppelns 101 eines elektromagnetischen Welleneingangssignals in den elektromagnetischen Wellenleiter 200 unter einem vorbestimmten Einkoppelwinkel 305, welcher sich von 0° unterscheidet, verdeutlicht.

Fig. 8a zeigt ein Konturdiagramm 800 von Koppelkoeffizienten in Abhängigkeit einer Wellenleiterausbreitungsmodengruppe und einer Umfangsordnung für einen vorbestimmten Einkoppelwinkel 305 und einen vorbestimmten lateralen Versatz 307 gemäß einer Ausführungsform. Der vorbestimmte Einkoppelwinkel 305 beträgt in diesem Ausführungsbeispiel 0,0°. Der vorbestimmte laterale Versatz 307 beträgt in diesem Ausführungsbeispiel 5,0μm. Die Koppelkoeffizienten werden durch die Konturlinien 801 dargestellt.

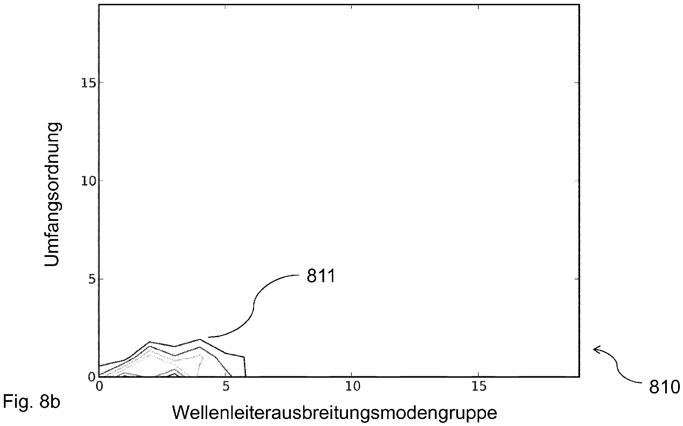

Fig. 8b zeigt ein Konturdiagramm 810 von Koppelkoeffizienten in Abhängigkeit einer Wellenleiterausbreitungsmodengruppe und einer Umfangsordnung für einen vorbestimmten Einkoppelwinkel 305 und einen vorbestimmten lateralen Versatz 307 gemäß einer Ausführungsform. Der vorbestimmte Einkoppelwinkel 305 beträgt in diesem Ausführungsbeispiel 0,0°. Der vorbestimmte laterale Versatz 307 beträgt in diesem Ausführungsbeispiel 10,0μm. Die Koppelkoeffizienten werden durch die Konturlinien 811 dargestellt.

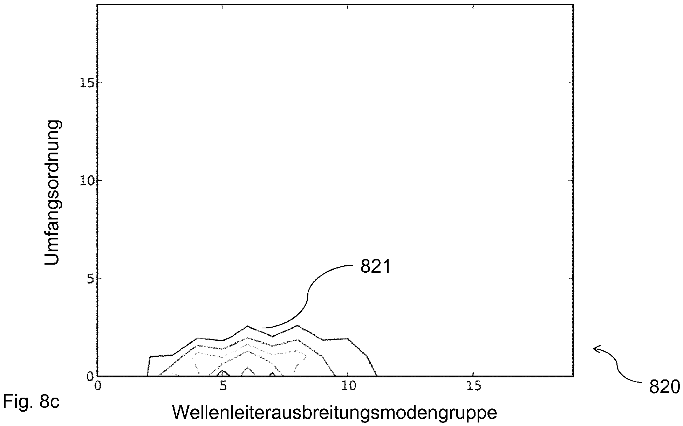

Fig. 8c zeigt ein Konturdiagramm 820 von Koppelkoeffizienten in Abhängigkeit einer Wellenleiterausbreitungsmodengruppe und einer Umfangsordnung für einen vorbestimmten Einkoppelwinkel 305 und einen vorbestimmten lateralen Versatz 307 gemäß einer Ausführungsform. Der vorbestimmte Einkoppelwinkel 305 beträgt in diesem Ausführungsbeispiel 0,0°. Der vorbestimmte laterale Versatz 307 beträgt in diesem Ausführungsbeispiel 15,0μm. Die Koppelkoeffizienten werden durch die Konturlinien 821 dargestellt.

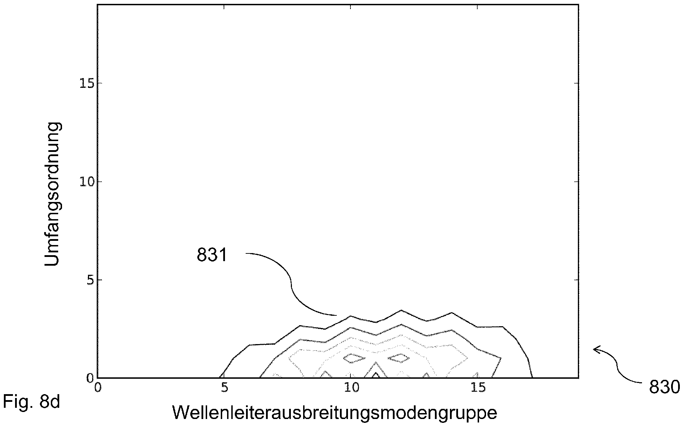

Fig. 8d zeigt ein Konturdiagramm 830 von Koppelkoeffizienten in Abhängigkeit einer Wellenleiterausbreitungsmodengruppe und einer Umfangsordnung für einen vorbestimmten Einkoppelwinkel 305 und einen vorbestimmten lateralen Versatz 307 gemäß einer Ausführungsform. Der vorbestimmte Einkoppelwinkel 305 beträgt in diesem Ausführungsbeispiel 0,0°. Der vorbestimmte laterale Versatz 307 beträgt in diesem Ausführungsbeispiel 20,0μm. Die Koppelkoeffizienten werden durch die Konturlinien 831 dargestellt.

In Fig. 8a, Fig. 8b , Fig. 8c und Fig. 8d ist somit die Verteilung der Koppelkoeffizienten in Konturdarstellung bei ausschließlich vorbestimmtem lateralem Versatz 307 bzw. seitlichem Versatz dargestellt. Es sind Beispiele für verschiedene vorbestimmte laterale Versatze 307 bzw. seitliche Versatze von 5μm, 10μm, 15μm und 20μm ohne Verkippung unter einem vorbestimmten Einkoppelwinkel 305 dargestellt.

Die Koppelkoeffizienten stellen ein Maß für den relativen Anteil der Gesamtleistung einer Wellenleiterausbreitungsmode bzw. einer Mehrzahl von Wellenleiterausbreitungsmoden im elektromagnetischen Wellenleiter 200 dar. In diesen Ausführungsbeispielen werden überwiegend Wellenleiterausbereitungsmoden mit niedriger Umfangsordnung einer Wellenleiterausbreitungsmodengruppe angeregt.

Da die Wellenleiterausbreitungsmoden mit niedriger Umfangsordnung überwiegend eine Feldintensitätsverteilung 207 aufweisen, welche sich bis zur Ausbreitungsrichtung 201 des elektromagnetischen Wellenleiters 200 erstrecken kann, wird das Charakterisieren des elektromagnetischen Wellenleiters 200 erschwert.

Fig. 8a-d zeigen somit gemäß einer Ausführungsform die relativen Kopplungskoeffizienten bezogen auf die Leistung, wenn der anregende weitere elektromagnetische Wellenleiter 301 ausschließlich vorbestimmt lateral bzw. seitlich versetzt wird. Es ist zu erkennen, dass nahezu ausschließlich die unteren Wellenleiterausbreitungsmoden einer jeden Wellenleiterausbreitungsmodengruppe angeregt werden, die einer niedrigen Umfangsordnung entsprechen. Diese Wellenleiterausbreitungsmoden mit niedriger Umfangsordnung weisen eine sehr kleine innere Kaustik auf, sodass die Feldintensitätsverteilung 207 bzw. Feldverteilung dieser Moden sich nahezu vollständig vom Zentrum (r = 0) des elektromagnetischen Wellenleiters 200 bis zum vorbestimmten lateralen Versatz 307 bzw. Radius der Einkopplung ($r = \Delta x$) verteilt.

Fig. 7a-d zeigen die Verteilung der Koppelkoeffizienten unter Anwendung der Modifikation nach dem vorgeschlagenen Verfahren. Es ist zu erkennen, dass im Gegensatz zu Fig. 8a-d in erster Linie die obersten Moden einer jeden Modengruppe angeregt werden.

Durch einen Vergleich der Konturdiagramme 7a-d mit den Konturdiagrammen 8a-d wird der Vorteil des Einkoppelns 101 eines elektromagnetischen Welleneingangssignals in den elektromagnetischen Wellenleiter 200 unter einem vorbestimmten Einkoppelwinkel 305, welcher sich von 0° unterscheidet, verdeutlicht.

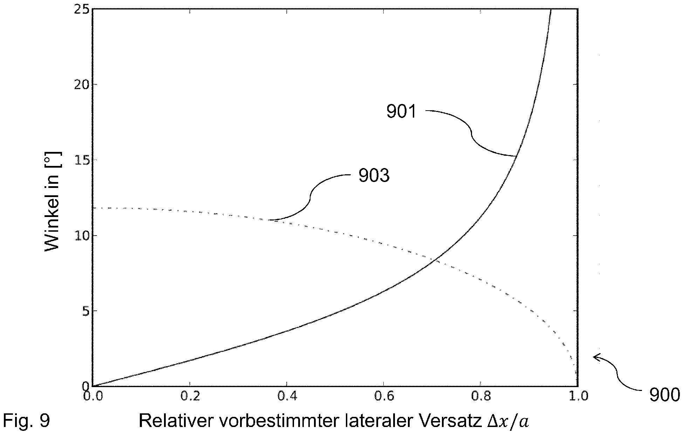

Fig. 9 zeigt ein Diagramm 900 eines vorbestimmten Einkoppelwinkels 305 und eines Akzeptanzwinkels in Abhängigkeit eines relativen vorbestimmten lateralen Versatzes gemäß einer Ausführungsform. Die Diagrammlinie 901 repräsentiert den vorbestimmten Einkoppelwinkel 305. Die Diagrammlinie 903 repräsentiert den Akzeptanzwinkel des elektromagnetischen Wellenleiters 200. Die numerische Apertur $A_N$ beträgt in diesem Ausführungsbeispiel 0,205.

Der vorbestimmte Einkoppelwinkel 305 kann beispielsweise anhand einer vorbestimmten Relation, die theoretisch und/oder empirisch sein kann, bestimmt werden. Der Akzeptanzwinkel kann beispielsweise durch eine weitere vorbestimmte Relation, die theoretisch und/oder empirisch sein kann, bestimmt werden.

Der relative vorbestimmte laterale Versatz bezieht sich auf den Quotienten zwischen dem vorbestimmten lateralen Versatz $\Delta x$ 307 und dem Kernradius a des elektromagnetischen Wellenleiters 200.

In Fig. 9 ist somit der vorbestimmte Einkoppelwinkel 305 bzw. Verkippungswinkel für verschiedene relative vorbestimmte laterale Versatze 307 bzw. relative seitliche Versatze für einen elektromagnetischen Wellenleiter 200 mit $A_N$ = 0,205 im Vergleich mit dem maximalen Akzeptanzwinkel des elektromagnetischen Wellenleiters 200 dargestellt.

Das Diagramm 900 verdeutlicht insbesondere die Abhängigkeit zwischen dem vorbestimmten Einkoppelwinkel 305 und dem relativen vorbestimmten lateralen Versatz gemäß einem Ausführungsbeispiel. Für große relative vorbestimmte laterale Versatze, in diesem Ausführungsbeispiel für den Wertebereich zwischen 0,7 und 1, kann der vorbestimmte Einkoppelwinkel 305 den Akzeptanzwinkel überschreiten.

Für diesen Wertebereich kann in diesem Ausführungsbeispiel der vorbestimmte Einkoppelwinkel 305 konstant auf dem zugehörigen Wert des Schnittpunktes beider Funktionsgraphen, in diesem Ausführungsbeispiel bei 8°, gehalten werden.

Für den vorbestimmten Einkoppelwinkel 305 bzw. Verkippungswinkel lässt sich folgender Zusammenhang herleiten:

$$\Delta\varphi(\Delta x) = \sin^{-1}\left(\frac{\Delta x \cdot A_N}{a \cdot n(\Delta x)}\right)$$

wobei $A_N$ die numerische Apertur des elektromagnetischen Wellenleiters 200, $a$ den Kernradius und $n(\Delta x)$ das Brechzahlprofil an der Stelle r beschreibt. Da das Brechzahlprofil durch die Messung erst ermittelt werden soll, kann hier unter Hinnahme eines vernachlässigbar kleinen Fehlers ein Parabolprofil für $n(\Delta x)$ angenommen werden. Es ergibt sich dann mit $n_0$ als Brechungsindex an der Wellenleiterachse:

$$\Delta\varphi(\Delta x) \approx \sin^{-1}\left(\frac{A_N}{n_0\sqrt{\left[\frac{a}{\Delta x}\right]^2 - 1}}\right)$$

Für einen typischen elektromagnetischen Wellenleiter 200 mit $A_N$ = 0,205 ergibt sich mit den vorstehend genannten Eigenschaften ein Verlauf für den vorbestimmten Einkoppelwinkel 305 bzw. die Verkippung wie in Fig. 9 dargestellt. Hierbei ist zu beachten, dass für große vorbestimmte laterale Versatze 307 bzw. seitliche Versatze $\Delta x$ der vorbestimmte Einkoppelwinkel 305 bzw. die Verkippung so groß sein könnte, dass die Wellenleiterausbreitungsmoden möglicherweise nicht mehr geführt werden könnten. Dies ist auf den Effekt zurück zu führen, dass der lokale maximale Akzeptanzwinkel nach außen hin immer kleiner und an der Kern-Mantel-Grenzfläche sogar zu Null werden kann. Für große vorbestimmte laterale Versatze 307 bzw. seitliche Versatze kann somit zwar eine Anregung von Wellenleiterausbreitungsmoden mit höherer Umfangsordnung möglich sein, aber dafür kann die Selektivität schlechter sein. Dennoch kann von einer besseren Selektivität ausgegangen werden als bei konventioneller Anregung. Siehe dazu auch die Fig. 7a-d und Fig. 8a-d im Vergleich.

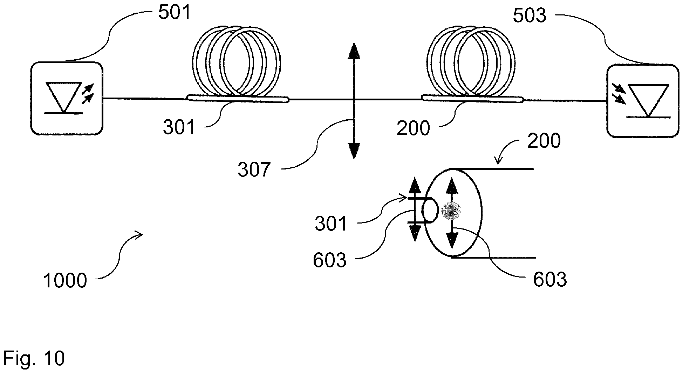

Fig. 10 zeigt eine schematische Darstellung einer Messvorrichtung 1000 nach dem Differential-Mode-Delay (DMD) Messprinzip gemäß einer Ausführungsform.

Die elektromagnetische Wellenquelle 501 ist an den weiteren elektromagnetischen Wellenleiter 301 angeschlossen und stellt ein elektromagnetisches Wellensignal bereit, welches in dem weiteren elektromagnetischen Wellenleiter 301 ausbreitungsfähig ist. Die elektromagnetische Wellenquelle 501 kann beispielsweise eine Wellenquelle für Mikrowellen, Millimeterwellen oder Submillimeterwellen umfassen. Darüber hinaus kann die elektromagnetische Wellenquelle 501 beispielsweise eine Wellenquelle für sichtbare oder unsichtbare Laserstrahlen, insbesondere eine Laserdiode oder einen Vertical-Cavity Surface Emitting Laser (VCSEL), umfassen.

Der elektromagnetische Wellendetektor 503 ist an den elektromagnetischen Wellenleiter 200 angeschlossen und detektiert ein elektromagnetisches Wellensignal, welches durch den elektromagnetischen Wellenleiter 200 transmittiert wird. Der elektromagnetische Wellendetektor 503 kann beispielsweise einen Wellendetektor für Mikrowellen, Millimeterwellen oder Submillimeterwellen umfassen. Darüber hinaus kann der elektromagnetische Wellendetektor 503 beispielsweise ein Detektor für sichtbare oder unsichtbare Laserstahlen, insbesondere eine Fotodiode oder ein Charge-Coupled Device (CCD) umfassen.

Durch die Einstellung eines Versatzes 603 zwischen dem elektromagnetischen Wellenleiter 200 und dem weiteren elektromagnetischen Wellenleiter 301 kann ein vorbestimmter lateraler Versatz 307 beim Einkoppeln des elektromagnetischen Welleneingangssignals eingestellt werden.

In Fig. 10 wird somit das Prinzip der DMD-Messung mit Anregung des zu untersuchenden elektromagnetischen Wellenleiters 200 mit einem lateral bzw. seitlich verschobenen weiteren elektromagnetischen Wellenleiter 301 verdeutlicht.

Dabei wird, gemäß einer Ausführungsform, das Welleneingangssignal mittels eines kleinen einmodigen weiteren elektromagnetischen Wellenleiters 301 so in den elektromagnetischen Wellenleiter 200 eingekoppelt, dass möglichst wenige einzelne Wellenleiterausbreitungsmoden selektiv angeregt werden. Durch die Tatsache, dass die DMD-Messung auf einer rechtwinkligen Einkopplung eines lateral bzw. radial zur Wellenleiterachse versetzten einmodigen weiteren elektromagnetischen Wellenleiters 301 beruht, werden dadurch zwar mit größerem vorbestimmten lateralen Versatz 307 bzw. Versatz immer höhere Wellenleiterausbreitungsmodenhauptgruppen angeregt, aber jeweils immer nur die niedrigsten Wellenleiterausbreitungsmoden mit der jeweils geringsten Umfangsordnung. Das ist im Allgemeinen ausreichend für die grundsätzliche Bestimmung der Laufzeiten einer Wellenleiterausbreitungsmodengruppe, da jeweils immer höhere Wellenleiterausbreitungsmodengruppen angeregt werden. Allerdings können die Laufzeiten der Wellenleiterausbreitungsmoden auch innerhalb der Wellenleiterausbreitungsmodengruppe variieren, was bei orthogonaler Einkopplung in den elektromagnetischen Wellenleiter 200 nicht bestimmt werden kann, da nur die untersten Wellenleiterausbreitungsmoden der Wellenleiterausbreitungsmodengruppe mit dieser Anordnung angeregt werden. Für die Bestimmung des Brechzahlprofils und damit für die allgemeine Charakterisierung des elektromagnetischen Wellenleiters 200 ist es hingegen vorteilhaft, möglichst die Wellenleiterausbreitungsmoden anzuregen, die nur einen kleinen Bereich des Brechzahlprofils nutzen, also das Feld auf einen schmalen Radiusbereich begrenzen. Insbesondere die in der konventionellen DMD-Messung angeregten Wellenleiterausbreitungsmoden mit der niedrigsten Umfangsordnung weisen jedoch eine sehr breite Feldintensitätsverteilung 207 bzw. Feldverteilung auf, die überwiegend einen kreisförmigen Bereich um die Wellenleiterachse umfasst bis zu einem maximalen Radius, der ungefähr dem vorbestimmten lateralen Versatz 307 bzw. seitlichen Versatz entspricht. Diese Moden haben also eine innere Kaustik von ungefähr $r_i \approx 0 \mu m$, während ihre äußere Kaustik ungefähr $r_a \approx \Delta x$ beträgt mit dem vorbestimmten lateralen Versatz 307 bzw. radialen Versatz $\Delta x$. Durch gezieltes zusätzliches Verkippen des weiteren elektromagnetischen Wellenleiters 301 beim vorbestimmten lateralen Versatz 307 bzw. radialen Versatz unter einem vorbestimmten Einkoppelwinkel 305 werden, gemäß einer Ausführungsform, nicht die niedrigsten Wellenleiterausbreitungsmoden, sondern die Wellenleiterausbreitungsmoden mit höheren Umfangsordnungen angeregt. Hierbei kann es sich weiterhin um dieselben Wellenleiterausbreitungsmodengruppen wie beim konventionellen DMD-Messverfahren handeln, nur dass Wellenleiterausbreitungsmoden höherer Umfangsordnung angeregt werden. Wenn der vorbestimmte Einkoppelwinkel 305 bzw. die Verkippung mit dem vorbestimmten lateralen Versatz 307 bzw. seitlichen Versatz genau abgestimmt wird, kann dadurch erreicht werden, dass innerhalb der angeregten Wellenleiterausbreitungsmodengruppe nahezu ausschließlich die Wellenleiterausbreitungsmoden mit höherer Umfangsordnung angeregt werden. Diese Wellenleiterausbreitungsmoden weisen eine grundsätzlich verschiedene Feldintensitätsverteilung 207 bzw. Feldverteilung zum oben genannten Fall auf. Das Feld dieser Wellenleiterausbreitungsmoden mit höherer Umfangsordnung kann grundsätzlich ringförmig und auf einen kleinen Radiusbereich begrenzt sein. Die innere und die äußere Kaustik können sehr nahe beieinander liegen und können ungefähr dem eingestellten vorbestimmten lateralen Versatz 307 bzw. seitlichen Versatz $r_i \approx r_a \approx \Delta x$ entsprechen. Da die Laufzeiten einer Wellenleiterausbreitungsmode nur durch den Bereich zwischen der inneren und äußeren Kaustik beeinflusst sein können, können Wellenleiterausbreitungsmoden mit einer lateral bzw. radial sehr schmalen Verteilung, bei denen $r_i \approx r_a$ gilt, vornehmlich nur durch den Bereich des Brechzahlprofils in der Nähe um $\Delta x$ beeinflusst werden. Somit wird eine einfache Interpretation des Brechzahlprofils an dieser Stelle ermöglicht.

Das erfindungsgemäße Verfahren betrifft das allgemeine Gebiet der Telekommunikation und nimmt im Speziellen Bezug auf Messtechnik von elektromagnetischen Wellenleitern bzw. Multimode-Glasfasern, die für Kurzstreckenverbindungen z. B. in Rechenzentren oder bei der Bürovernetzung verwendet wird. Gemäß einer Ausführungsform werden die Charakterisierung der Modenlaufzeiten und indirekt des Brechzahlprofils elektromagnetischer Wellenleiter verbessert, indem einzelne Wellenleiterausbreitungsmoden bzw. Wellenleiterausbreitungsmodengruppen selektiv und in einer Art und Weise angeregt werden, dass sich die Feldintensitätsverteilung bzw. Feldverteilung auf einen möglichst kleinen Bereich des Brechzahlprofils konzentriert.

Das Verfahren erlaubt neben der selektiven Bestimmung der Laufzeiten der Wellenleiterausbreitungsmodengruppen die Messung der Laufzeiten der Wellenleiterausbreitungsmoden, die ausschließlich durch einen kleinen Bereich des Brechzahlprofils beeinflusst wurden. Somit ist die Auswertung der Messung einfacher und erlaubt einen Rückschluss von den gemessenen Wellenleiterausbreitungsmodenlaufzeiten auf das Brechzahlprofil.

Die Laufzeit dieser Wellenleiterausbreitungsmoden wird durch Anregung und Empfang kurzer Pulse wie bei der DMD-Messung bestimmt. Dadurch kann erreicht werden, dass die resultierenden Laufzeiten der den elektromagnetischen Wellenleiter durchlaufenden Pulse von nur einem kleinen Bereich des Brechzahlprofils beeinflusst werden, wodurch eine indirekte Bestimmung des Brechzahlprofils des elektromagnetischen Wellenleiters vereinfacht wird. Im Gegensatz zur DMD-Messung erfolgt die Anregung jedoch nicht über einen ausschließlich vorbestimmt lateral bzw. seitlich verschobenen einmodigen weiteren elektromagnetischen Wellenleiter, sondern mit einer zusätzlich eingeführten Verkippung unter einem vorbestimmten Einkoppelwinkel aus der Ebene des vorbestimmten lateralen Versatzes bzw. der Verschiebung hinaus. Diese Verkippung unter einem vorbestimmten Einkoppelwinkel kann bei dem vorbestimmten lateralen Versatz bzw. der seitlichen Verschiebung so angepasst werden, dass immer die höchste Wellenleiterausbreitungsmode einer Wellenleiterausbreitungsmodenhauptgruppe angeregt wird, die die höchste Umfangsordnung aufweist.

Gemäß einer Ausführungsform wird somit die Charakterisierung der Wellenleiterausbreitungsmodenlaufzeiten und des Brechzahlprofils von elektromagnetischen Wellenleitern, insbesondere von Mehrmoden-Glasfasern, mittels einer modenselektiven Anregung durch einen lateral bzw. seitlich versetzten und unter einem vorbestimmten Einkoppelwinkel verkippten weiteren elektromagnetischen Wellenleiter, insbesondere eine Einmodenfaser, ermöglicht.

Gegenüber einer Bandbreitenmessung hat das Verfahren den Vorteil, dass direkt auf das Brechzahlprofil des elektromagnetischen Wellenleiters zurückgeschlossen werden kann und dadurch prinzipiell die Möglichkeit besteht, das Brechzahlprofil bzw. Profil aktiv zu optimieren. Gegenüber der zurzeit verwendeten DMD-Methode bietet das vorgeschlagene Verfahren den Vorteil, dass durch die spezielle Anregung der jeweils höheren Wellenleiterausbreitungsmoden einer Wellenleiterausbreitungsmodenhauptgruppe nur Wellenleiterausbreitungsmoden angeregt werden, die nur durch einen verhältnismäßig kleinen Bereich des Brechzahlprofils beeinflusst werden, was zum einen eine einfachere Rekonstruktion des Brechzahlprofils ermöglicht, zum anderen ausschließt, dass Messfehler, die an einer Stelle des Brechzahlprofils aufgetreten sind, sich auf andere Bereiche auswirken. Beide Vorteile ergeben sich daraus, dass die für die Analyse des Brechzahlprofils verwendeten Wellenleiterausbreitungsmoden sehr stark auf einen kleinen Radiusbereich konzentriert sind und damit auch nur von einem sehr kleinen Bereich das Brechzahlprofils beeinflusst werden. Dadurch lässt sich die Auswertung des Brechzahlprofils derart entkoppeln, dass immer direkt aus den vorgenommenen Messwerten auf den jeweiligen Bereich des Profils geschlossen werden kann, ohne Information über benachbarte Bereiche zu benötigen. Gegenüber den bereits genannten Verfahren zur direkten Bestimmung des Brechzahlprofils weist das vorgeschlagene Verfahren den Vorteil auf, dass die Messung direkt an dem elektromagnetischen Wellenleiter vorgenommen werden kann mit einer höheren Auflösung, als es bei den meisten anderen Verfahren der Fall ist. Zudem ist das vorgeschlagene Verfahren deutlich einfacher einsetzbar und schneller in der Anwendung.

## BEZUGSZEICHENLISTE

| | |
|---|---|
| 100 | Verfahren zum Charakterisieren eines elektromagnetischen Wellenleiters |
| 101 | Einkoppeln eines elektromagnetischen Welleneingangssignals |
| 103 | Erfassen einer Charakteristik des elektromagnetischen Wellenleiters |
| 200 | Elektromagnetischer Wellenleiter |
| 201 | Ausbreitungsrichtung |
| 203 | Kern-Mantel-Grenzfläche |
| 205 | Mantelgrenzfläche |
| 207 | Feldintensitätsverteilung |
| 301 | Weiterer elektromagnetischer Wellenleiter |
| 303 | Ausbreitungsrichtung |
| 305 | Vorbestimmter Einkoppelwinkel |
| 307 | Vorbestimmter lateraler Versatz |
| 401 | Wellenfokussierendes und/oder wellenbrechendes Element |
| 403 | Gebrochene Ausbreitungsrichtung |
| 500 | Messvorrichtung |
| 501 | Elektromagnetische Wellenquelle |
| 503 | Elektromagnetischer Wellendetektor |
| 505 | Einkoppeleinrichtung |
| 507 | Erfassungseinrichtung |
| 509 | Leitung für ein Referenzsignal |
| 511 | Leitung für ein Messsignal |
| 601 | Winkel zwischen einem elektromagnetischen Wellenleiter und einem weiteren elektromagnetischen Wellenleiter |
| 603 | Versatz zwischen einem elektromagnetischen Wellenleiter und einem weiteren elektromagnetischen Wellenleiter |
| 700 | Konturdiagramm |
| 701 | Konturlinien |
| 710 | Konturdiagramm |
| 711 | Konturlinien |
| 720 | Konturdiagramm |
| 721 | Konturlinien |
| 730 | Konturdiagramm |
| 731 | Konturlinien |
| 800 | Konturdiagramm |
| 801 | Konturlinien |
| 810 | Konturdiagramm |
| 811 | Konturlinien |
| 820 | Konturdiagramm |
| 821 | Konturlinien |
| 830 | Konturdiagramm |
| 831 | Konturlinien |

900 Diagramm
901 Diagrammlinie für den lokalen maximalen Einkoppelwinkel
903 Diagrammlinie für den optimalen Einkoppelwinkel
1000 Messvorrichtung

**Patentansprüche**

1. Verfahren (100) zum Charakterisieren eines elektromagnetischen Wellenleiters (200) mit einem rotationssymmetrischen Querschnitt, wobei der elektromagnetische Wellenleiter (200) eine Glasfaser ist, wobei ein Brechzahlprofil des elektromagnetischen Wellenleiters (200) ein Parabolprofil ist, mit:

   Bestimmen eines vorbestimmten Einkoppelwinkels (305), welcher sich von 0° unterscheidet, in Abhängigkeit von einem vorbestimmten lateralen Versatz (307), sodass zumindest eine vorbestimmte Wellenleiterausbreitungsmode des elektromagnetischen Wellenleiters (200) zu einer ringförmigen Feldintensitätsverteilung (207) im elektromagnetischen Wellenleiter (200) beiträgt, wobei der vorbestimmte Einkoppelwinkel (305) in Abhängigkeit von dem vorbestimmten lateralen Versatz (307) auf der Basis des folgenden Zusammenhangs bestimmt wird:

$$\Delta\varphi(\Delta x) \approx \sin^{-1}\left(\frac{A_N}{n_0\sqrt{\left[\frac{a}{\Delta x}\right]^2 - 1}}\right)$$

   wobei $\Delta\varphi$ den vorbestimmten Einkoppelwinkel (305), $\Delta x$ den vorbestimmten lateralen Versatz (307), $A_N$ eine numerische Apertur des elektromagnetischen Wellenleiters (200), $a$ einen Kernradius des elektromagnetischen Wellenleiters (200), und $n_0$ einen Brechungsindex des elektromagnetischen Wellenleiters (200) an einer Wellenleiterachse bezeichnet;
   Einkoppeln (101) eines elektromagnetischen Welleneingangssignals in den elektromagnetischen Wellenleiter (200) unter dem vorbestimmten Einkoppelwinkel (305), welcher sich von 0° unterscheidet, und mit dem vorbestimmten lateralen Versatz (307), um die zumindest eine vorbestimmte Wellenleiterausbreitungsmode in den elektromagnetischen Wellenleiter (200) einzukoppeln; und
   Erfassen (103) einer Charakteristik des elektromagnetischen Wellenleiters (200) auf der Basis eines elektromagnetischen Wellenausgangssignals.

2. Verfahren (100) nach Anspruch 1, wobei der vorbestimmte Einkoppelwinkel (305) von dem vorbestimmten lateralen Versatz (307) abhängig ist, oder wobei der vorbestimmte laterale Versatz (307) von dem vorbestimmten Einkoppelwinkel (305) abhängig ist.

3. Verfahren (100) nach einem der vorstehenden Ansprüche, wobei der vorbestimmte Einkoppelwinkel (305) ferner in Abhängigkeit geometrischer Abmessungen des elektromagnetischen Wellenleiters (200), insbesondere eines Kernradius, sowie in Abhängigkeit von Materialparametern des elektromagnetischen Wellenleiters (200), insbesondere einer Brechzahl oder einer numerischen Apertur, bestimmt wird.

4. Verfahren (100) nach einem der vorstehenden Ansprüche, wobei das elektromagnetische Welleneingangssignal mittels eines weiteren elektromagnetischen Wellenleiters (301) in den elektromagnetischen Wellenleiter (200) eingekoppelt wird.

5. Verfahren (100) nach Anspruch 4, wobei der vorbestimmte Einkoppelwinkel (305) oder ein vorbestimmter lateraler Versatz (307) beim Einkoppeln (101) des elektromagnetischen Welleneingangssignals durch einen Winkel oder einen Versatz zwischen dem elektromagnetischen Wellenleiter (200) und dem weiteren elektromagnetischen Wellenleiter (301) bestimmt ist.

6. Verfahren (100) nach Anspruch 4 oder 5, wobei der vorbestimmte Einkoppelwinkel (305) oder ein vorbestimmter lateraler Versatz (307) beim Einkoppeln (101) des elektromagnetischen Welleneingangssignals durch ein wellenfokussierendes oder wellenbrechendes Element (401) eingestellt werden.

7. Verfahren (100) nach einem der vorstehenden Ansprüche, wobei die Charakteristik des elektromagnetischen Wellenleiters (200) eine Laufzeit oder eine differentielle Modenverzögerung, eine Signaldämpfung, eine Modendispersion oder eine Pulsverbreiterung ist.

8. Verfahren (100) nach einem der vorstehenden Ansprüche, wobei die Charakteristik des elektromagnetischen Wellenleiters (200) eine Laufzeit oder eine differentielle Modenverzögerung oder eine Pulsverbreiterung ist, und wobei zum Erfassen der Laufzeit oder der differentiellen Modenverzögerung oder der Pulsverbreiterung ein Zeitunterschied zwischen einem Empfang des elektromagnetischen Wellenausgangssignals und einem Empfang eines Referenzsignals bestimmt wird.

9. Verfahren (100) nach einem der vorstehenden Ansprüche, wobei die Charakteristik des elektromagnetischen Wellenleiters (200) eine Signaldämpfung ist, und wobei zur Erfassung der Signaldämpfung eine Leistung des elektromagnetischen Wellenausgangssignals bestimmt wird.

10. Verfahren (100) nach einem der vorstehenden Ansprüche, wobei die Charakteristik des elektromagnetischen Wellenleiters (200) eine Modendispersion oder eine Pulsverbreiterung ist, und wobei zur Erfassung der Modendispersion oder der Pulsverbreiterung eine Pulsbreite des elektromagnetischen Wellenausgangssignals bestimmt wird.

11. Messvorrichtung (500) zum Charakterisieren eines elektromagnetischen Wellenleiters (200) mit einem rotationssymmetrischen Querschnitt, wobei der elektromagnetische Wellenleiter (200) eine Glasfaser ist, wobei ein Brechzahlprofil des elektromagnetischen Wellenleiters (200) ein Parabolprofil ist, mit:

einer Einkoppeleinrichtung (505), welche zum Einkoppeln (101) eines elektromagnetischen Welleneingangssignals in den elektromagnetischen Wellenleiter (200) unter einem vorbestimmten Einkoppelwinkel (305), welcher sich von 0° unterscheidet, und unter einem vorbestimmten lateralen Versatz (307), eingerichtet ist, um zumindest eine vorbestimmte Wellenleiterausbreitungsmode in den elektromagnetischen Wellenleiter (200) einzukoppeln, wobei der vorbestimmte Einkoppelwinkel (305), welcher sich von 0° unterscheidet, in Abhängigkeit von dem vorbestimmten lateralen Versatz (307) derart bestimmt wird, dass die zumindest eine vorbestimmte Wellenleiterausbreitungsmode des elektromagnetischen Wellenleiters (200) zu einer ringförmigen Feldintensitätsverteilung (207) im elektromagnetischen Wellenleiter (200) beiträgt, wobei der vorbestimmte Einkoppelwinkel (305) in Abhängigkeit von dem vorbestimmten lateralen Versatz (307) auf der Basis des folgenden Zusammenhangs bestimmt wird:

$$\Delta\varphi(\Delta x) \approx \sin^{-1}\left(\frac{A_N}{n_0\sqrt{\left[\frac{a}{\Delta x}\right]^2 - 1}}\right)$$

wobei $\Delta\varphi$ den vorbestimmten Einkoppelwinkel (305), $\Delta x$ den vorbestimmten lateralen Versatz (307), $A_N$ eine numerische Apertur des elektromagnetischen Wellenleiters (200), $a$ einen Kernradius des elektromagnetischen Wellenleiters (200), und $n_0$ einen Brechungsindex des elektromagnetischen Wellenleiters (200) an einer Wellenleiterachse bezeichnet; und
einer Erfassungseinrichtung (507) zum Erfassen (103) einer Charakteristik des elektromagnetischen Wellenleiters (200) auf der Basis eines elektromagnetischen Welenausgangssignals.


**Claims**

1. A method (100) for characterizing an electromagnetic waveguide (200) with a rotationally symmetrical cross section, wherein the electromagnetic waveguide (200) is a glass fiber, wherein a refractive index profile of the electromagnetic waveguide (200) is a parabolic profile, with:

determining of a predetermined coupling angle (305) which is different from 0°, as a function of a predetermined lateral offset (307), so that at least one predetermined waveguide propagation mode of the electromagnetic waveguide (200) contributes to an annular field intensity distribution (207) in the electromagnetic waveguide (200), wherein the predetermined coupling angle (305) is determined as a function of the predetermined lateral offset (307) based on the following relation:

$$\Delta\varphi(\Delta x) \approx \sin^{-1}\left(\frac{A_N}{n_0\sqrt{\left[\frac{a}{\Delta x}\right]^2 - 1}}\right)$$

where $\Delta\varphi$ denotes the predetermined coupling angle (305), $\Delta x$ denotes the predetermined lateral offset (307), $A_N$ denotes a numerical aperture of the electromagnetic waveguide (200), a denotes a core radius of the electromagnetic waveguide (200), and $n_0$ denotes a refractive index of the electromagnetic waveguide (200) on a waveguide axis;

coupling (101) of an electromagnetic wave input signal into the electromagnetic waveguide (200) under the predetermined coupling angle (305) which is different from 0° and with the predetermined lateral offset (307), in order to couple the at least one predetermined waveguide propagation mode into the electromagnetic waveguide (200); and

acquiring (103) of a characteristic of the electromagnetic waveguide (200) based on an electromagnetic wave output signal.

2. The method (100) according to Claim 1, wherein the predetermined coupling angle (305) is dependent on the predetermined lateral offset (307), or wherein the predetermined lateral offset (307) is dependent on the predetermined coupling angle (305).

3. The method (100) according to any one of the preceding claims, wherein the predetermined coupling angle (305) is determined moreover as a function of geometric dimensions of the electromagnetic waveguide (200), in particular a core radius, and as a function of material parameters of the electromagnetic waveguide (200), in particular a refractive index or a numerical aperture.

4. The method (100) according to any one of the preceding claims, wherein the electromagnetic wave input signal is coupled by means of an additional electromagnetic waveguide (301) into the electromagnetic waveguide (200).

5. The method (100) according to Claim 4, wherein, during the coupling (101) of the electromagnetic wave input signal, the predetermined coupling angle (305) or a predetermined lateral offset (307) is determined by an angle or by an offset between the electromagnetic waveguide (200) and the additional electromagnetic waveguide (301).

6. The method (100) according to Claim 4 or 5, wherein, during the coupling (101) of the electromagnetic wave input signal, the predetermined coupling angle (305) or a predetermined lateral offset (307) is set by a wave-focusing or wave-diffracting element (401).

7. The method (100) according to any one of the preceding claims, wherein the characteristic of the electromagnetic waveguide (200) is a travel time or a differential mode delay, a signal damping, a mode dispersion or a pulse broadening.

8. The method (100) according to any one of the preceding claims, wherein the characteristic of the electromagnetic waveguide (200) is a travel time or a differential mode delay or a pulse broadening, and wherein, for the acquiring of the travel time or of the differential mode delay or of the pulse broadening, a time difference between a reception of the electromagnetic wave output signal and a reception of a reference signal is determined.

9. The method (100) according to any one of the preceding claims, wherein the characteristic of the electromagnetic waveguide (200) is a signal damping, and wherein, for the acquisition of the signal damping, a power of the electromagnetic wave output signal is determined.

10. The method (100) according to any one of the preceding claims, wherein the characteristic of the electromagnetic waveguide (200) is a mode dispersion or a pulse broadening, and wherein, for the acquisition of the mode dispersion or of the pulse broadening, a pulse width of the electromagnetic wave output signal is determined.

11. A measurement device (500) for characterizing an electromagnetic waveguide (200) with a rotationally symmetrical cross section, wherein the electromagnetic waveguide (200) is a glass fiber, wherein a refractive index profile of the electromagnetic waveguide (200) is a parabolic profile, with:

a coupling device (505) which is arranged for the coupling (101) of an electromagnetic wave input signal into the electromagnetic waveguide (200) under a predetermined coupling angle (305) which is different from 0° and under a predetermined lateral offset (307) in order to couple at least one predetermined waveguide propagation mode into the electromagnetic waveguide (200), wherein the predetermined coupling angle (305) which is different from 0° is determined as a function of the predetermined lateral offset (307) in such a manner that the at least one predetermined waveguide propagation mode of the electromagnetic waveguide (200) contributes to an annular field intensity distribution (207) in the electromagnetic waveguide (200), wherein the predetermined coupling angle (305) is determined as a function of the predetermined lateral offset (307) based on the following relation:

$$\Delta\varphi(\Delta x) \approx \sin^{-1}\left(\frac{A_N}{n_0\sqrt{\left[\frac{a}{\Delta x}\right]^2 - 1}}\right)$$

where $\Delta\varphi$ denotes the predetermined coupling angle (305), $\Delta x$ denotes the predetermined lateral offset (307), $A_N$ denotes a numerical aperture of the electromagnetic waveguide (200), a denotes a core radius of the electromagnetic waveguide (200), and $n_0$ denotes a refractive index of the electromagnetic waveguide (200) on a waveguide axis; and

an acquisition device (507) for the acquisition (103) of a characteristic of the electromagnetic waveguide (200) based on an electromagnetic wave output signal.

## Revendications

1. Procédé (100) de caractérisation d'un guide d'ondes électromagnétique (200) avec une section transversale à symétrie de rotation, dans lequel le guide d'ondes électromagnétique (200) est une fibre de verre, dans lequel un profil d'indice de réfraction du guide d'ondes électromagnétique (200) est un profil de parabole, avec :

détermination d'un angle d'injection prédéterminé (305), qui est différent de 0°, en fonction d'un décalage latéral prédéterminé (307), de sorte qu'au moins un mode de propagation de guide d'ondes prédéterminé du guide d'ondes électromagnétique (200) contribue à une distribution d'intensité de champ annulaire (207) dans le guide d'ondes électromagnétique (200), dans lequel l'angle d'injection prédéterminé (305) est déterminé en fonction du décalage latéral prédéterminé (307) sur la base de la relation suivante :

$$\Delta\varphi(\Delta x) \approx \sin^{-1}\left(\frac{A_N}{n_0\sqrt{\left[\frac{a}{\Delta x}\right]^2 - 1}}\right)$$

dans lequel $\Delta\varphi$ désigne l'angle d'injection prédéterminé (305), Ax le décalage latéral prédéterminé (307), $A_N$ une ouverture numérique du guide d'ondes électromagnétique (200), a un rayon de noyau du guide d'ondes électromagnétique (200), et $n_0$ un indice de réfraction du guide d'ondes électromagnétique (200) au niveau d'un axe de guide d'ondes ;

injection (101) d'un signal d'entrée d'ondes électromagnétique dans le guide d'ondes électromagnétique (200) sous l'angle d'injection prédéterminé (305), qui est différent de 0°, et avec le décalage latéral prédéterminé (307), pour injecter l'au moins un mode de propagation de guide d'ondes prédéterminé dans le guide d'ondes électromagnétique (200) ; et

détection (103) d'une caractéristique du guide d'ondes électromagnétique (200) sur la base d'un signal de sortie d'ondes électromagnétique.

**2.** Procédé (100) selon la revendication 1, dans lequel l'angle d'injection prédéterminé (305) dépend du décalage latéral prédéterminé (307), ou dans lequel le décalage latéral prédéterminé (307) dépend de l'angle d'injection prédéterminé (305).

**3.** Procédé (100) selon l'une quelconque des revendications précédentes, dans lequel l'angle d'injection prédéterminé (305) est déterminé en outre en fonction de dimensions géométriques du guide d'ondes électromagnétique (200), en particulier d'un rayon de noyau, ainsi qu'en fonction de paramètres de matériel du guide d'ondes électromagnétique (200), en particulier d'un indice de réfraction ou d'une ouverture numérique.

**4.** Procédé (100) selon l'une quelconque des revendications précédentes, dans lequel le signal d'entrée d'ondes électromagnétique est injecté dans le guide d'ondes électromagnétique (200) au moyen d'un autre guide d'ondes électromagnétique (301).

**5.** Procédé (100) selon la revendication 4, dans lequel l'angle d'injection prédéterminé (305) ou un décalage latéral prédéterminé (307) est déterminé lors de l'injection (101) du signal d'entrée d'ondes électromagnétique par un angle ou un décalage entre le guide d'ondes électromagnétique (200) et l'autre guide d'ondes électromagnétique (301).

**6.** Procédé (100) selon la revendication 4 ou 5, dans lequel l'angle d'injection prédéterminé (305) ou un décalage latéral prédéterminé (307) est réglé lors de l'injection (101) du signal d'entrée d'ondes électromagnétique par un élément de focalisation des ondes ou de réfraction des ondes (401).

**7.** Procédé (100) selon l'une quelconque des revendications précédentes, dans lequel la caractéristique du guide d'ondes électromagnétique (200) est une durée de fonctionnement ou un retard de mode différentiel, une atténuation de signal, une dispersion de mode ou un élargissement d'impulsion.

**8.** Procédé (100) selon l'une quelconque des revendications précédentes, dans lequel la caractéristique du guide d'ondes électromagnétique (200) est une durée de fonctionnement ou un retard de mode différentiel ou un élargissement d'impulsion, et dans lequel pour la détection de la durée de fonctionnement ou du retard de mode différentiel ou de l'élargissement d'impulsion, une différence de temps entre une réception du signal de sortie d'ondes électromagnétique et une réception d'un signal de référence est déterminée.

**9.** Procédé (100) selon l'une quelconque des revendications précédentes, dans lequel la caractéristique du guide d'ondes électromagnétique (200) est une atténuation de signal, et dans lequel pour la détection de l'atténuation de signal une puissance du signal de sortie d'ondes électromagnétique est déterminée.

**10.** Procédé (100) selon l'une quelconque des revendications précédentes, dans lequel la caractéristique du guide d'ondes électromagnétique (200) est une dispersion de mode ou un élargissement d'impulsion, et dans lequel pour la détection de la dispersion de mode ou de l'élargissement d'impulsion, une largeur d'impulsion du signal de sortie d'ondes électromagnétique est déterminée.

**11.** Dispositif de mesure (500) de caractérisation d'un guide d'ondes électromagnétique (200) avec une section transversale à symétrie de rotation, dans lequel le guide d'ondes électromagnétique (200) est une fibre de verre, dans lequel un profil d'indice de réfraction du guide d'ondes électromagnétique (200) est un profil de parabole, avec :

un dispositif d'injection (505), qui est aménagé pour l'injection (101) d'un signal d'entrée d'ondes électromagnétique dans le guide d'ondes électromagnétique (200) sous un angle d'injection prédéterminé (305), qui est différent de 0°, et sous un décalage latéral prédéterminé (307), pour injecter au moins un mode de propagation de guide d'ondes prédéterminé dans le guide d'ondes électromagnétique (200), dans lequel l'angle d'injection prédéterminé (305), qui est différent de 0°, en fonction du décalage latéral prédéterminé (307) est déterminé de sorte que l'au moins un mode de propagation de guide d'ondes prédéterminé du guide d'ondes électromagnétique (200) contribue à une distribution d'intensité de champ annulaire (207) dans le guide d'ondes électromagnétique (200), dans lequel l'angle d'injection prédéterminé (305) est déterminé en fonction du décalage latéral prédéterminé (307) sur la base de la relation suivante :

$$\Delta\varphi(\Delta x) \approx \sin^{-1}\left(\frac{A_N}{n_0\sqrt{\left[\frac{a}{\Delta x}\right]^2 - 1}}\right)$$

dans lequel $\Delta\varphi$ désigne l'angle d'injection prédéterminé (305), $\Delta x$ le décalage latéral prédéterminé (307), $A_N$ une ouverture numérique du guide d'ondes électromagnétique (200), a un rayon de noyau de guide d'ondes électromagnétique (200), et $n_0$ un indice de réfraction du guide d'ondes électromagnétique (200) au niveau d'un axe de guide d'ondes ; et

un dispositif de détection (507) pour la détection (103) d'une caractéristique du guide d'ondes électromagnétique (200) sur la base d'un signal de sortie d'ondes électromagnétique.

101

Einkoppeln eines elektromagnetischen Welleneingangssignals

103

Erfassen einer Charakteristik des elektromagnetischen Wellenleiters

100

Fig. 1

Fig. 2

Fig. 3

Fig. 4

501          505          503

Einkoppeleinrichtung

301

200

Erfassungseinrichtung

509

507

511

500

Fig. 5

Fig. 6a

Fig. 6b

Fig. 6c

Fig. 7a

Umfangsordnung

Wellenleiterausbreitungsmodengruppe

701

700

Fig. 7b

**Umfangsordnung** (y-axis)

**Wellenleiterausbreitungsmodengruppe** (x-axis)

711

710

Fig. 7c

Fig. 7d

Fig. 8a

Fig. 8b

Fig. 8c

**Umfangsordnung** (y-axis)

**Wellenleiterausbreitungsmodengruppe** (x-axis)

821

820

Fig. 8d

Fig. 9

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **DRUCKSCHRIFT S. ; GOLOWICH, W. ; REED ; A. RITGER.** A New Modal Power Distribution Measurement for High-Speed Short-Reach Optical Systems. *IEEE/OSA Journal of Lightwave Technology,* 2004, vol. 22 (2), 457-468
- **DRUCKSCHRIFT K. ; PETERMANN.** Simple relationship between differential mode delay in optical fibres and the deviation from optimum profile. *IEE Electron. Lett.,* November 1978, vol. 14, 793-793
- A Statistical Analysis of Conditioned Launch for Gigabit Ethernet Links Using Multimode Fiber. **DRUCKSCHRIFT WEBSTER, M. et al.** Journal of Lightwave Technology. IEEE Service Center, 01. September 1999, vol. 17
- **DRUCKSCHRIFT ROSE, A. et al.** Mode Field Perturbations and Numerical Aperture Broadening Due to Angular Misalignment in Multimode Fiber Coupling. *Optical Fibers and Sensors for Medical Diagnostics and Treatment Applications IX, Proc. of SPIE,* 2009, vol. 7173
- Spiral Launch Method for Enhanced MMF Bandwidth. **DRUCKSCHRIFT VERNOOY, D. ; BLAUVELT H.** IEEE Draft. IEEE-SA, 16. Marz 2004, vol. 802.3, 1-48